(19) Europäisches Patentamt
European Patent Office
Office européen des brevets

(11) **EP 4 132 106 A1**

(12) **EUROPEAN PATENT APPLICATION**
published in accordance with Art. 153(4) EPC

(43) Date of publication:
**08.02.2023 Bulletin 2023/06**

(21) Application number: **20933385.5**

(22) Date of filing: **30.04.2020**

(51) International Patent Classification (IPC):
*H04W 36/14* (2009.01)

(52) Cooperative Patent Classification (CPC):
**H04W 36/14**

(86) International application number:
**PCT/CN2020/088528**

(87) International publication number:
**WO 2021/217672 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **SUN, Fei**
  **Shenzhen, Guangdong 518129 (CN)**
• **LUO, Haiyan**
  **Shenzhen, Guangdong 518129 (CN)**
• **DAI, Mingzeng**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **LOAD CONTROL METHOD FOR NETWORK SLICE AND RELATED PRODUCT**

(57)    Embodiments of this application disclose a network slice load control method and a related product. The method includes: A radio access network device receives first remapping information from a core network device, where the first remapping information includes an identifier of a first network slice and an identifier of at least one second network slice, and the first remapping information indicates that PDU sessions, in the first network slice, of a plurality of terminal devices connected to the radio access network device are to be remapped to one of the at least one second network slice; and the radio access network device sends first indication information to the core network device, where the first indication information includes the identifier of the second network slice, and the first indication information indicates the core network device to remap the PDU sessions, in the first network slice, of the terminal devices to the second network slice, so that a service request of the terminal device is responded in time by using the second network slice, service continuity of the terminal device is ensured, and load control on the first network slice is implemented.

FIG. 3

Description

**TECHNICAL FIELD**

The present invention relates to the communications field, and in particular, to a network slice load control method and a related product.

**BACKGROUND**

With development of mobile communication technologies, various new services and application scenarios continuously emerge, and requirements of these services on network functions, connection performance, security, and the like are greatly different. If a single network is used to carry these services, it is difficult to satisfy requirements for a high bandwidth, a low delay, and high reliability at the same time. In addition, building a new network for each type of service brings huge costs. 5th generation (5th generation, 5G) mobile communication needs to be flexible and scalable, and can satisfy different service requirements. Therefore, in 5G, end-to-end network slicing (network slicing) is used to provide users with customized network services. Network slicing is an on-demand networking manner. A plurality of virtual isolated logical subnets are separated on a unified infrastructure, and each network slice is logically isolated from a radio access network to a core network, to provide a targeted service for a user.

To ensure that each network function in a 5G system can run under a standard capacity, and ensure basic connectivity and necessary services of a terminal device (user equipment, UE), the 5G system supports overload control of an access and mobility management function (access and mobility management function, AMF), congestion control of a non-access stratum (non-access stratum, NAS), and the like, to resolve a problem of core network resource overload of a network slice.

The overload control of the AMF and the congestion control of the NAS are implemented by delaying or rejecting a service request initiated by the UE or releasing a current service connection of the UE. However, the service request of the UE cannot be responded in time, and a service of the UE is interrupted.

**SUMMARY**

Embodiments of this application provide a network slice load control method and a related product, so that when a core network resource of a first network slice is overloaded, a service request of a terminal device can be responded in time by using a second network slice. Therefore, service continuity of the terminal device is ensured and load control on the first network slice is implemented.

According to a first aspect, an embodiment of this application provides a network slice load control method. The method includes: A radio access network device receives first remapping information from a core network device, where the first remapping information includes an identifier of a first network slice and an identifier of at least one second network slice, and the first remapping information indicates that PDU sessions, in the first network slice, of a plurality of terminal devices are to be remapped to one of the at least one second network slice; and the radio access network device sends first indication information to the core network device, where the first indication information includes the identifier of the first network slice and the identifier of the second network slice, and the first indication information indicates that the PDU sessions, in the first network slice, of the plurality of terminal devices connected to the radio access network device are to be remapped to one of the at least one second network slice.

In this embodiment of this application, the radio access network device sends the first indication information to the core network device, so that the core network device remaps the PDU sessions of the plurality of terminal devices connected to the radio access network device from the first network slice to the second network slice, where the plurality of terminal devices are all or a part of terminal devices connected to the radio access network device. When a core network resource of the first network slice is overloaded, a service request of the terminal device is responded in time by using the second network slice, so that quality of service of the terminal device is ensured.

With reference to the first aspect, in an optional implementation, the method further includes: The radio access network device sends second remapping information to one terminal device connected to the radio access network device, where the second remapping information includes the identifier of the first network slice and an identifier of at least one third network slice, and the at least one third network slice is a part or all of the at least one second network slice.

In this implementation, the radio access network device uses, as the third network slice, the part or all of the at least one second network slice indicated by the first remapping information, and sends, by using the second remapping information, the identifier of the at least one third network slice to the terminal device connected to the radio access network device, so that the terminal device determines whether to access the third network slice and determines a to-be-accessed third network slice.

With reference to the first aspect, in an optional implementation, when the second remapping information includes only an identifier of one third network slice, the second remapping information indicates the terminal device to access the third network slice; and that the radio access network device sends first indication information to the core network device includes: The radio access network device receives second indication information from the terminal device, and sends the first indication information to the core network device, where the second indication information indicates that the terminal device is to access the third network slice, the identifier that is of the second network slice and that is included in the first indication information is an identifier of the third network slice, and the first indication information further includes an identifier of the terminal device.

In this implementation, the radio access network device indicates, by using the second remapping information, the terminal device connected to the radio access network device to access the third network slice, so that the third network slice replaces the first network slice to implement a service of the terminal device. When determining to access the third network slice, the terminal device sends the second indication information to the radio access network device, so that the radio access network device sends the first indication information to the core network device, and the core network device may remap a PDU session of the terminal device from the first network slice to the second network slice.

With reference to the first aspect, in an optional implementation, when the second remapping information includes identifiers of at least two third network slices, the second remapping information indicates the terminal device to select one network slice from the at least two third network slices for accessing. That the radio access network device sends first indication information to the core network device includes: The radio access network device receives second indication information from the terminal device, where the second indication information indicates that the terminal device is to access the network slice, the first indication information further includes an identifier of the terminal device, and the identifier that is of the second network slice and that is included in the first indication information is an identifier of the network slice.

In this implementation, the radio access network device indicates, by using the second remapping information, the terminal device to access one of the at least two third network slices, so that the network slice replaces the first network slice to implement a service of the terminal device. Further, the terminal device may select, based on the identifiers of the third network slices and the current service, one network slice from the at least two network slices for accessing, so that performance experience of the terminal device is further improved. In addition, the first indication information is at a granularity of a terminal device, and may indicate the core network device to remap a session of one terminal device from the first network slice to the second network slice.

With reference to the first aspect, in an optional implementation, before that the radio access network device sends first indication information to the core network device, the method further includes: The radio access network device determines that the PDU sessions of the plurality of terminal devices connected to the radio access network device are to be remapped from the first network slice to the second network slice.

In this implementation, the radio access network device selects one network slice from the at least one second network slice as the second network slice indicated by the first indication information, so that the core network device remaps the sessions, in the first network slice, of the terminal devices connected to the radio access network device to the second network slice selected by the radio access network device, implements load of the first network slice through decision of the radio access network device, and ensures service continuity of the terminal devices connected to the radio access network device.

With reference to the first aspect, in an optional implementation, after that a radio access network device receives first remapping information from a core network device, and before that the radio access network device sends first indication information to the core network device, the method further includes: The radio access network device receives an RRC resume request from a terminal device, where the RRC resume request requests to resume a PDU session, in the first network slice, of the terminal device.

In this implementation, after receiving the RRC resume request of the terminal device, the radio access network device remaps, to the second network slice based on the RRC resume request, the PDU session that is in the first network slice and that the terminal device requests to resume, to remap the PDU session that is of the terminal device in an inactive state and that is in the first network slice to the second network slice, so that load of the first network slice is reduced.

With reference to the first aspect, in an optional implementation, before that the radio access network device sends first indication information to the core network device, the method further includes: The radio access network device sends an RRC resume message to the terminal device, where the RRC resume message indicates the terminal device to access the second network slice.

In this implementation, when the terminal device requests to resume the PDU session in the first network slice, the radio access network device indicates, by using the RRC resume message, the terminal device to resume a connection and access the second network slice. Load control on the first network slice is implemented, and the RRC resume message indicates the terminal device to connect to the second network slice, so that RRC connection reconfiguration does not need to be initiated for the terminal device. Therefore, signaling overheads are reduced.

With reference to the first aspect, in an optional implementation, after that the radio access network device receives an RRC resume request from a terminal device, and before that the radio access network device sends an RRC resume message to the terminal device, the method further includes: The radio access network device determines that the session, in the first network slice, of the terminal device is to be remapped to the second network slice.

With reference to the first aspect, in an optional implementation, the method further includes: The radio access network device broadcasts the first remapping information, where the first remapping information indicates a terminal device that receives the first remapping information to update, when a to-be-requested network slice is the first network slice, the to-be-requested network slice to one of the at least one second network slice.

In this implementation, the radio access network device indicates, by broadcasting the first remapping information, the terminal device to select, when preparing to access the first network slice, one network slice from the at least one second network slice to access, to perform load control on the first network slice when the first network slice is overloaded, and implement, by using the second network slice, a service to be performed by the terminal device.

With reference to the first aspect, in an optional implementation, the method further includes: The radio access network device broadcasts information about a network slice supported by the radio access network device and remapping information of each network slice. Remapping information of one network slice includes an identifier of at least one to-be-remapped network slice of the network slice. Remapping information of one network slice indicates the terminal device to select, when a to-be-requested network slice is the network slice, one network slice from the network slice and a to-be-remapped network slice of the network slice as an updated to-be-requested network slice. A PDU session of the terminal device in a network slice may be remapped to a to-be-remapped network slice of the network slice, and a service of the terminal device in the network slice may be implemented by using a network resource of the to-be-remapped network slice of the network slice. The to-be-requested network slice is a network slice to which the terminal device is to initiate an access request.

In this implementation, the radio access network device broadcasts the information about the network slice supported by the radio access network device, so that the terminal device learns of the network slice supported by the radio access network device. The radio access network device further broadcasts remapping information of each network slice, so that when preparing to initiate an access request to one network slice, the terminal device selects one network slice from the network slice and a to-be-remapped network slice of the network slice to initiate the access request. Therefore, a plurality of terminal devices are prevented from accessing one network slice together, and load balancing of the network slice is implemented.

With reference to the first aspect, in an optional implementation, the method further includes: When the radio access network device does not support the second network slice, the radio access network device receives cell information from the core network device, where the cell information includes information about at least one first cell, the first cell supports the second network slice, and the cell information indicates the radio access network device to control the terminal devices connected to the radio access network device to access the first cell, so that the terminal device connected to the radio access network device accesses the second network slice through the first cell.

In this implementation, when the radio access network device does not support the second network slice, the radio access network device receives the information about the first cell that supports the network slice, so that the radio access network device indicates the terminal device to access the first cell and access the second network slice through the first cell. Therefore, flexibility of accessing the second network slice by the terminal device is improved.

With reference to the first aspect, in an optional implementation, the information about the first cell includes at least one of the following identifiers: a physical cell identifier PCI, a cell global identifier CGI, an identifier of the radio access network device, a radio access node area code RAN AC, a closed access group identifier CAG ID, a radio access network slice area identifier RSA ID, and a carrier identifier.

In this implementation, when the radio access network device does not support the second network slice, the radio access network device receives the information about the first cell that supports the network slice. The information about the first cell may be at a plurality of granularities, for example, may be information about a carrier, a cell, or the radio access network device, so that flexibility of accessing the second network slice by the terminal device is further improved.

In a specific embodiment, the radio access network device selects a target cell from the at least one first cell, and sends a handover request to a target radio access network device to which the target cell belongs, so that the terminal device hands over a serving cell to the target cell, and accesses the second network slice through the target cell.

In a specific embodiment, the radio access network device selects a target cell from the at least one first cell, and sends a dual-connectivity request to a target radio access network device to which the target cell belongs, so that the terminal device uses the target cell as a secondary cell, and accesses the second network slice through the target cell.

According to a second aspect, an embodiment of this application provides a network slice load control method. The method includes: A core network device sends first remapping information to a radio access network device, where the first remapping information includes an identifier of a first network slice and an identifier of at least one second network slice, and the first remapping information indicates to that PDU sessions, in the first network slice, of a plurality of terminal devices connected to the radio access network device are to be remapped to one of the at least one second network slice; and the core network device receives first indication information sent by the radio access network device, where the first indication information includes the identifier of the first network slice and the identifier of the second network slice, and the first indication information indicates the core network device to remap the PDU sessions, in the first network slice, of the plurality of terminal devices connected to the radio access network device to the second network slice.

In this embodiment of this application, the core network device sends the first remapping information, and remaps the PDU sessions of the terminal devices from the first network slice to the second network slice when receiving the first indication information, so that when a core network resource of the first network slice is overloaded, a service request of the terminal device is responded in time by using the second network slice. Therefore, quality of service of the terminal device is ensured.

With reference to the second aspect, in an optional implementation, the first indication information further includes an identifier of a terminal device, and the second network slice is a network slice that the terminal device determines to access.

In this implementation, the first indication information is at a granularity of a terminal device, and indicates that a PDU session of one terminal device is to be remapped from the first network slice to the second network slice. A session of a single terminal device is remapped from the first network slice to the second network slice.

With reference to the second aspect, in an optional implementation, when the radio access network device does not support the second network slice, the core network device sends cell information to the radio access network device, where the cell information includes information about at least one first cell, the first cell supports the second network slice, and the cell information indicates the radio access network device to control the terminal devices connected to the radio access network device to access the first cell, so that the terminal device connected to the radio access network device accesses the second network slice through the first cell.

In this implementation, when the radio access network device does not support the second network slice, the core network device sends, to the radio access network device, the information about the first cell that supports the network slice, so that the radio access network device controls the terminal device to access the first cell and access the second network slice through the first cell, so that flexibility of accessing the second network slice by the terminal device is improved.

With reference to the second aspect, in an optional implementation, the information about the first cell includes at least one of the following identification information: a physical cell identifier PCI, a cell global identifier CGI, an identifier of the radio access network device, a radio access node area code RAN AC, a closed access group identifier CAG ID, a radio access network slice area identifier RSA ID, and identification information of a carrier.

When the radio access network device does not support the second network slice, the core network device provides the radio access network device with the information about the first cell that supports the network slice. The information about the first cell may be at a plurality of granularities, for example, may be information about a carrier, a cell, or the radio access network device, so that flexibility of accessing the second network slice by the terminal device is improved.

According to a third aspect, an embodiment of this application provides a network slice load control method. The method includes: When accessing a first network slice, a terminal device receives second remapping information sent by a radio access network device, where the second remapping information includes an identifier of the first network slice and an identifier of at least one third network slice, and the second remapping information indicates the terminal device to access one of the at least one third network slice, so that a PDU session, in the first network slice, of the terminal device is remapped to the third network slice of the at least one third network slice; and the terminal device sends second indication information to the radio access network device, where the second indication information indicates that the terminal device is to access the third network slice of the at least one third network slice.

With reference to the third aspect, in an optional implementation, the method further includes: The terminal device in an idle state or an inactive state receives first remapping information broadcast by the radio access network device, where the first remapping information includes the identifier of the first network slice and an identifier of at least one second network slice, and the first remapping information indicates the terminal device to update, when a to-be-requested network slice is the first network slice, the to-be-requested network slice to one of the at least one second network slice.

In this implementation, the terminal device in the idle state or the inactive state initiates an access request to the second network slice based on the first remapping information, to reduce load of the first network slice and implement load balancing of the network slice.

According to a fourth aspect, an embodiment of this application provides a network slice load control method. The method includes: A core network device sends first remapping information to a terminal device, where the first remapping information includes an identifier of a first network slice and an identifier of at least one second network slice, and the first remapping information indicates the terminal device to select a network slice to be accessed from the at least one second network slice, so that a PDU session, in the first network slice, of the terminal device is remapped to the second network slice; and the core network device receives third indication information of the terminal device, where the third indication information includes the identifier of the first network slice and the identifier of the second network slice, and the third indication information indicates that the terminal device determines to access the second network slice.

According to a fifth aspect, an embodiment of this application provides a network slice load control method. The method includes: A terminal device receives first remapping information sent by a core network device, where the first remapping information includes an identifier of a first network slice and an identifier of at least one second network slice, and the first remapping information indicates the terminal device to select a network slice to be accessed from the at least one second network slice, so that a PDU session, in the first network slice, of the terminal device is remapped to the second network slice; and the terminal device sends third indication information to the core network device, where the third indication information includes the identifier of the first network slice and the identifier of the second network slice, and the third indication information indicates that the terminal device determines to access the second network slice.

According to a sixth aspect, an embodiment of this application provides a network slice load control method. The method includes: A radio access network device sends a cell selection parameter of at least one network slice, where the cell selection parameter of the network slice indicates a terminal device to determine, when performing cell selection and a to-be-requested network slice of the terminal device is the network slice, whether to select a second cell of the radio access network device for camping on; and the second cell supports a part or all of the at least one network slice.

According to the sixth aspect, the radio access network device sends the cell selection parameter of the network slice, to indicate the terminal device to perform cell selection based on the cell selection parameter of the network slice, and further control the terminal device to access the second cell that supports the network slice, to implement load balancing of the network slice.

With reference to the sixth aspect, in an optional implementation, the method further includes: The radio access network device sends a cell reselection measurement startup parameter of at least one network slice, where the cell reselection measurement startup parameter of the network slice indicates the terminal device to determine, when a to-be-requested network slice is the network slice, whether to start measurement on a third cell of the radio access network device, and the third cell supports a part or all of the at least one network slice.

With reference to the sixth aspect, in an optional implementation, the method further includes: The radio access network device sends a cell reselection parameter of at least one network slice, where the cell reselection parameter of the network slice indicates the terminal device to determine, when a to-be-requested network slice is the network slice, whether to reselect a fourth cell of the radio access network device for camping on, and the fourth cell supports a part or all of the at least one network slice.

According to a seventh aspect, an embodiment of this application provides a cell reselection method. The method includes: A terminal device obtains information about a network slice supported by a neighboring cell; the terminal device measures the neighboring cell to obtain signal quality of the neighboring cell; and when a fifth cell in the neighboring cell supports a first network slice, and signal quality of the fifth cell satisfies a cell reselection condition, the terminal device reselects the fifth cell for camping on.

In this embodiment, the terminal device can preferentially camp on the fifth cell that supports the first network slice, so that when the terminal device requires a service of the first network slice, the terminal device implements the service in the first network slice by using the first network slice. Therefore, performance experience of the terminal device is improved.

With reference to the seventh aspect, in an optional implementation, when signal quality of a serving cell is less than a ninth threshold or the serving cell supports a second network slice but does not support the first network slice, the terminal device obtains the information about the network slice supported by the neighboring cell.

In this implementation, when the signal quality of the serving cell is poor or the serving cell does not support the first network slice, the terminal device may reselect, based on the information about the network slice supported by the neighboring cell, a cell that satisfies at least one of the following conditions for camping on: the first network slice is supported and signal quality is good, so as to ensure that the terminal device obtains a service in the first network slice and communication quality of the terminal device.

With reference to the seventh aspect, in an optional implementation, when the neighboring cell does not include the fifth cell, or the signal quality of the fifth cell does not satisfy the cell reselection condition, the method further includes: When the neighboring cell includes a sixth cell, the sixth cell supports the second network slice, and signal quality of the sixth cell satisfies the cell reselection condition, the terminal device reselects the sixth cell for camping on.

In this implementation, when the neighboring cell does not support the first network slice or the signal quality of the fifth cell is poor, the terminal device reselects the sixth cell having good signal quality for camping on, and implements the service, in the first network slice, of the terminal device by using the second network slice, so that flexibility of obtaining the service by the terminal device is improved.

According to an eighth aspect, an embodiment of this application provides a communication apparatus. The apparatus has a function of implementing the method according to any one of the first aspect to the seventh aspect. The function may be implemented by hardware, or may be implemented by executing corresponding software by hardware. The hardware or the software includes one or more units corresponding to the foregoing function.

In a possible implementation, the communication apparatus includes a processing unit and a transceiver unit. The transceiver unit is configured to receive information. The processing unit is configured to perform the method according to any one of the first aspect to the seventh aspect.

In a possible implementation, the communication apparatus includes a processor, a transceiver, and a memory. The transceiver is configured to send and receive information, the memory stores computer-executable instructions, the processor is connected to the memory and the transceiver through a bus, and the processor executes the computer-executable instructions stored in the memory, so that the communication apparatus implements the method according to any one of the first aspect to the seventh aspect.

According to a ninth aspect, an embodiment of this application provides a communication apparatus. The communication apparatus includes a processor and an interface circuit. The interface circuit is configured to receive code instructions and transmit the code instructions to the processor, and the processor runs the code instructions to perform the method according to any one of the first aspect to the fourth aspect.

According to a tenth aspect, an embodiment of this application provides a communication system. The communication system includes a radio access network device, a core network device, and a terminal device. The radio access network device is configured to perform the method according to any implementation of the first aspect, the core network device may be configured to perform the method according to any implementation of the second aspect, and the terminal device may be configured to perform the method according to any implementation of the third aspect.

According to an eleventh aspect, an embodiment of this application provides another communication system. The communication system includes a core network device and a terminal device. The terminal device may be configured to perform the method according to any implementation of the fifth aspect, and the core network device is configured to perform the method according to any implementation of the fourth aspect.

According to a twelfth aspect, an embodiment of this application provides a readable storage medium. The readable storage medium is configured to store instructions. When the instructions are executed, the method according to any one of the first aspect to the seventh aspect is implemented.

According to a thirteenth aspect, an embodiment of this application provides a computer program product including instructions. When the instructions are executed, the method according to any one of the first aspect to the seventh aspect is implemented.

According to a fourteenth aspect, a chip is provided. The chip includes a processor and a memory. The memory is configured to store a computer program, the processor is configured to invoke the computer program from the memory and run the computer program, and the computer program is configured to implement the method according to any one of the first aspect to the seventh aspect and the optional implementations of the first aspect to the seventh aspect.

## BRIEF DESCRIPTION OF DRAWINGS

FIG. 1 is a schematic diagram of an architecture of a network system according to an embodiment of this application;
FIG. 2 is a schematic diagram in which different cells support different network slices;
FIG. 3 is an interaction flowchart of a network slice load control method according to an embodiment of this application;
FIG. 4 is an interaction flowchart of another network slice load control method according to an embodiment of this application;
FIG. 5 is an interaction flowchart of still another network slice load control method according to an embodiment of this application;
FIG. 6 is an interaction flowchart of still another network slice load control method according to an embodiment of this application;
FIG. 7 is an interaction flowchart of still another network slice load control method according to an embodiment of this application;
FIG. 8 is an interaction flowchart of still another network slice load control method according to an embodiment of this application;
FIG. 9 is an interaction flowchart of still another network slice load control method according to an embodiment of this application;
FIG. 10 is an interaction flowchart of still another network slice load control method according to an embodiment of this application;
FIG. 11 is a schematic diagram of a cell reselection method according to an embodiment of this application;
FIG. 12 is a schematic diagram of another cell reselection method according to an embodiment of this application;
FIG. 13 is a schematic diagram of a logical structure of a communication apparatus according to an embodiment of this application; and

FIG. 14 is a simplified schematic diagram of an entity structure of a communication apparatus according to an embodiment of this application.

## DESCRIPTION OF EMBODIMENTS

In embodiments of the specification, claims, and accompanying drawings of this application, the terms "first", "second", "third", and the like are intended to distinguish between similar objects but do not necessarily indicate a specific order or sequence. In addition, terms "include", "comprise", or any other variant thereof are intended to cover a non-exclusive inclusion, for example, include a series of steps or units. The method, system, product, or device is not necessarily limited to those steps or units that are clearly listed, but may include other steps or units that are not clearly listed or inherent to such a process, method, product, or device.

The following describes technical solutions in this application with reference to the accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

A radio access network device described in embodiments of the present invention may be a base transceiver station (base transceiver station, BTS) in a 2G system (such as a global system for mobile communications (global system for mobile communications, GSM) or a code division multiple access (code division multiple access, CDMA)) system, or may be a NodeB (NodeB, NB) in a 3G system (such as a universal mobile telecommunications system (universal mobile telecommunications system, UMTS), a wideband code division multiple access (wideband code division multiple access, WCDMA) system, or a time division-synchronous code division multiple access (time division-synchronous code division multiple access, TD-SCDMA)) system, or may be a evolved NodeB (evolved NodeB, eNB) in a long term evolution (long term evolution, LTE) system, or may be a radio access network device, for example, a gNB, in a 5G network.

A core network (core network, CN) device in embodiments of this application may be a control plane anchor of a terminal device, and provides functions such as registration area (registration area) update for the terminal device. For example, the core network device may include an access and mobility management function (access and mobility management function, AMF). The core network device may be a network device configured to provide functions such as core access (core access) and mobility management for the terminal device. A specific function of the core network device may be similar to a function of a mobility management entity (mobility management entity, MME) in an LTE system.

Before a network slice load control method and a related product in this application are described, to facilitate understanding of content of this application, some terms appearing in embodiments of this application are first described.

Network slices (network slices) are logical networks that are customized based on different service requirements or tenants and that have different network capabilities and network features on a physical or virtual network infrastructure. A network slice may be a complete end-to-end network including a terminal device, an access network, a transport network, a core network, and an application server, can provide a telecommunications service, and has a specific network capability. Alternatively, the network slice may be any combination of the terminal device, the access network, the transport network, the core network, and the application server. For example, the network slice includes only the access network and the core network. A terminal device establishes an association with a network slice by using a protocol data unit (protocol data unit, PDU) session (session), and traffic (traffic) of different network slices is managed by using different PDU sessions. In a network, there may be a plurality of PDU sessions in a single network slice, and PDU sessions in different slices are isolated from each other. One terminal device may have a plurality of PDUs sessions, and each PDU session can correspond to only one network slice. Because one PDU session corresponds to only one network slice, establishment of each PDU session is associated with an identifier of one network slice.

The identifier of the network slice may include but is not limited to at least one of the following: network slice type information, service type information, tenant (tenant) information, user group information, slice group information, network slice instance information, a dedicated core network (dedicated core network, DCN) identifier, a single network slice selection assistance information (single network slice selection assistance information, S-NSSAI), S-NSSAI group information, a temporary identifier (temporary ID), and an R-NSSAI (RAN-NSSAI).

Specific definitions of the foregoing terms are as follows:

Network slice type information: For example, the network slice type information may indicate a network slice type such as an enhanced mobile broadband (enhanced mobile broadband, eMBB) service, ultra-reliable low-latency communication (ultra-reliable low-latency communication, URLLC), or massive machine-type communications (massive machine-type communications, mMTC). Optionally, the network slice type information may alternatively indicate an end-to-end network slice type, including a RAN-to-CN network slice type; or may indicate a RAN-side network slice type or a CN-side network slice type.

Service type information: Identification information related to a specific service. For example, the service type information may indicate a service feature or specific service information of a service such as a video service, a vehicle-to-everything service, or a voice service.

Tenant information: The tenant information indicates information about a customer that creates or rents a network slice, for example, Tencent or the State Grid Corporation of China.

User group information: The user group information indicates grouping information for grouping users based on a specific feature, for example, grouping information for grouping users based on a user level.

Slice group information: The slice group information indicates grouping information for grouping network slices based on a specific feature. For example, all network slices that can be accessed by a terminal device may be classified as one slice group, or network slices may be grouped according to another standard.

Network slice instance information: The network slice instance information indicates an identifier and feature information of an instance created for the network slice. For example, an identifier may be allocated to a network slice instance, to indicate the network slice instance. Alternatively, a new identifier may be remapped based on the identifier of the network slice instance, the new identifier is associated with the network slice instance, and a receiver may identify, based on the identifier, the specific network slice instance indicated by the identifier.

Dedicated core network identifier: The identifier uniquely indicates a dedicated core network in an LTE system, an eLTE system, or a 5G system, for example, a dedicated core network in an internet of things. Optionally, remapping may be performed between the dedicated core network identifier and a network slice identifier, the network slice identifier may be obtained by mapping the dedicated core network identifier, and the dedicated core network identifier may also be obtained by mapping the network slice identifier.

S-NSSAI: The S-NSSAI may include at least slice/service type (slice/service type, SST) information, and optionally, may further include slice differentiator (slice differentiator, SD) information. The SST information indicates a behavior of a network slice, such as a feature and a service type of the network slice. The SD information is complementary information of the SST information. If the SST information is for a plurality of network slices, the SD information may correspond to a unique network slice instance. S-NSSAI types include:

(1) Subscribed S-NSSAI (subscribed S-NSSAI): The subscribed S-NSSAI belongs to subscription data of a subscriber.

(2) Default S-NSSAI (default S-NSSAI): According to a carrier's policy, one or more subscribed S-NSSAIs may be set as one or more default S-NSSAIs. If UE does not include an allowed S-NSSAI (allowed NSSAI) in a registration request (registration request) message, a network device uses the default S-NSSAI to serve the UE.

(3) Requested NSSAI (requested NSSAI): The requested NSSAI is an NSSAI included by the UE in the registration request message.

(4) Allowed NSSAI (allowed NSSAI): The allowed NSSAI indicates an S-NSSAI that can be used by the UE in a current network. The network device sends the allowed NSSAI to the UE by using an information element: a registration accept (registration accept) message.

(5) Rejected NSSAI (rejected NSSAI): The rejected NSSAI indicates S-NSSAIs, in NSSAIs requested by the UE, that are rejected by the network. The network sends the rejected NSSAIs to the UE by using the information element: the registration accept (Registration Accept) message.

(6) Configured NSSAI (configured NSSAI): The configured NSSAI is an NSSAI configured by the network device for the UE. After receiving this configuration parameter, the UE may determine S-NSSAIs that are available in the network. The network device sends the configured NSSAIs to the UE by using the information element: the registration accept (registration accept) message. If a configuration of the UE changes after registration, the network device may notify the UE of the update by using a configuration update command (configuration update command). The UE stores a configured NSSAI configured by each network for the UE in nonvolatile storage space. Only one configured NSSAI can be configured for each PLMN.

S-NSSAI group information: The S-NSSAI group information is identification information indicating grouping S-NSSAIs based on a specific feature. For example, all network slices of a common core network device that can be accessed by the terminal device may be used as an S-NSSAI group.

Temporary identifier: The temporary identifier is allocated by a core network device to a terminal device that is already registered on a CN side, and the temporary identifier may uniquely indicate a specific core network device.

R-NSSAI (RAN-NSSAI): The R-NSSAI indicates a group of specific S-NSSAIs, namely, an identifier of a set of the group of specific S-NSSAIs.

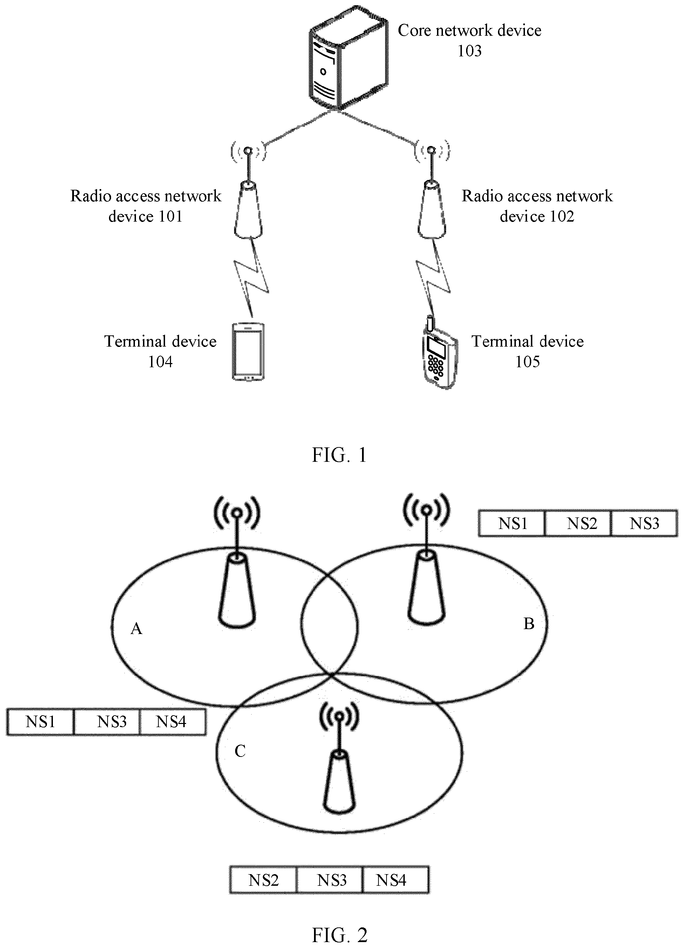

First, for ease of understanding, the following briefly describes an application environment of embodiments of this application with reference to FIG. 1. As shown in FIG. 1, the application environment includes a radio access network device 101, a radio access network device 102, a core network device 103, a terminal device 104, and a terminal device 105. A radio access network device may be connected to at least one terminal device. For example, the radio access network device 101 is connected to the terminal device 104, and the radio access network device 102 is connected to the terminal device 105. The radio access network device may be connected to at least one core network device. For example, the radio access network device 101 and the radio access network device 102 are separately connected to the core network device 103.

There is an interface, for example, an NG interface, between the core network device and the radio access network device. Through the interface, the core network device and the radio access network device may communicate with each other. There may be no communication interface between radio access network devices. If there is a communication interface, for example, an Xn interface, between the radio access network device 101 and the radio access network device 102, the radio access network device 101 and the radio access network device 102 may communicate with each other. If there is no communication interface between the radio access network device 101 and the radio access network device 102, the radio access network device 101 and the radio access network device 102 cannot communicate with each other. Therefore, the radio access network device 101 and the radio access network device 102 can transmit, only when there is a communication interface, information about network slices separately supported by the radio access network device 101 and the radio access network device 102. When there is no communication interface, the radio access network device 101 and the radio access network device 102 cannot communicate with each other, and cannot send the information about the network slices separately supported by the radio access network device 101 and the radio access network device 102. In this case, the radio access network device 101 and the radio access network device 102 may interact with each other through the core network device.

There may be a plurality of types of services in a terminal device, for example, an enhanced mobile broadband (enhanced mobile broadband, eMBB) service, an ultra-reliable low-latency communication (ultra-reliable low-latency communication, URLLC) service, and a massive machine-type communications (massive machine-type communications, mMTC) service. Network slices corresponding to different types of service PDU sessions may be different. For example, the terminal device 104 is used as an example. Three PDU sessions currently established by the radio access network device 101 for the terminal device 104 are a PDU session 1, a PDU session 2, and a PDU session 3, where the PDU session 1 corresponds to a network slice 1, the PDU session 2 corresponds to a network slice 2, and the PDU session 3 corresponds to a network slice 3. However, because operators or service providers that provide the network slices are different, a same service may also correspond to different PDU sessions. For example, the PDU session 1 corresponds to the network slice 1, the PDU session 2 corresponds to the network slice 2, and services supported by the network slice 1 and the network slice 2 are the same. It should be noted that one PDU session of the terminal device corresponds to only one network slice.

It should be noted that, the PDU session is a connection established between the terminal device and a data network, and a type of the connection between the terminal device and the data network may be an internet protocol (internet protocol, IP)-based connection, an ethernet-based connection, or another type of connection.

In addition, due to network slice deployment, network slices supported by different radio access network devices are different. As shown in FIG. 2, a cell 1 supports network slices (network slices, NSs) 1, 3, and 4, a cell 2 supports network slices 1, 2, and 3, and a cell 3 supports network slices 2, 3, and 4. Based on the foregoing example, there is another case in which some cells or base stations do not support a network slice. In other words, the cells or base stations are similar to conventional LTE base stations or 3G base stations, and do not support a feature of the network slice; or even if the cells or base stations have a capability of supporting the network slice, the cells or base stations do not support the network slice due to operator deployment or an operator policy.

Because a core network resource of a network slice may be overloaded, a core network device starts an overload control procedure for the overloaded network slice, to limit an access request for the overloaded network slice. For a case in which the network slice is overloaded, a radio access network device starts congestion control, and configures, for example, back-off duration, for a terminal device. The terminal device cannot initiate a service request for the network slice within the back-off duration. Currently, when a network slice is overloaded, an access request of a terminal device is rejected or delayed. Consequently, a service requested by the terminal device cannot be responded in time, and the service of the terminal device may be interrupted. A service request of the terminal device for a network slice requests a network to provide a service of the network slice. For example, the service request is an access request for the network slice, a session management (session management, SM) request, or a request for obtaining a service data packet from the network slice. How to ensure that a service requested by a terminal device is responded in time when a network slice accessed by the terminal device is overloaded is a problem worth studying.

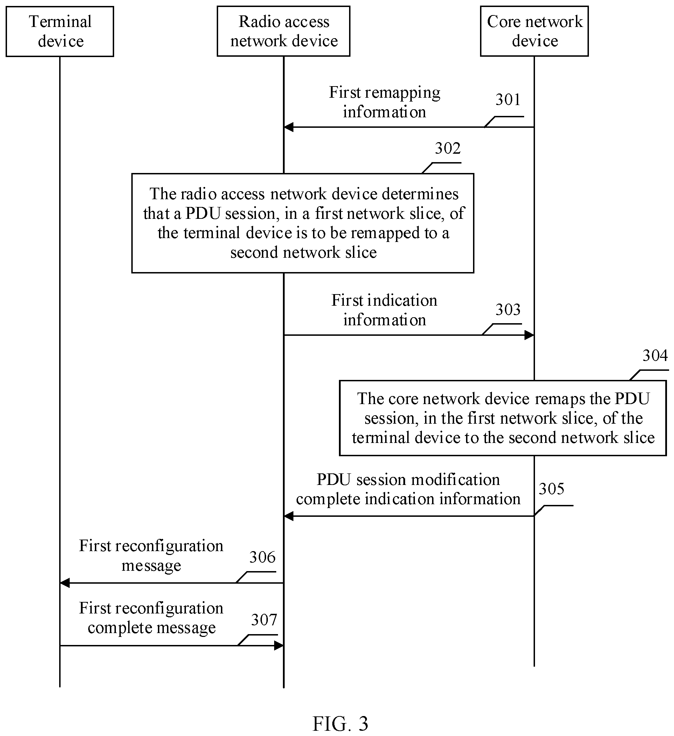

FIG. 3 is a schematic diagram of a network slice load control method according to an embodiment of this application. The method in FIG. 3 may be applied to the network architecture in FIG. 1. A radio access network device may be the radio access network device 101 or the radio access network device 102. This embodiment of this application may be applied to the following scenario: A first network slice is a network slice that has been accessed by a terminal device connected to the radio access network device, the radio access network device supports at least one second network slice, and a PDU session in the first network slice may be remapped to the second network slice. The terminal device is in a connected state. As shown in FIG. 3, the network slice load control method provided in this embodiment of the present invention includes the following steps.

301. A core network device sends first remapping information to the radio access network device.

The first remapping information includes an identifier of the first network slice and an identifier of the at least one second network slice. The terminal device obtains, by using the PDU session in the first network slice, a service supported by the first network slice. The service supported by the first network slice may be implemented by using a network resource of the second network slice. After the PDU session in the first network slice is remapped to the second network slice, the terminal device may obtain, from the second network slice by using the PDU session, the service supported by the first network slice. For example, if the first network slice supports an ultra-low delay communication service, the ultra-low delay communication service may be implemented by using the network resource of the second network slice.

The first remapping information indicates that PDU sessions, in the first network slice, of a plurality of terminal devices connected to the radio access network device are to be remapped to one of the at least one second network slice, so that the radio access network device determines whether to remap the sessions of the plurality of terminal devices connected to the radio access network device from the first network slice to the second network slice. The plurality of terminal devices may be all or some of the terminal devices connected to the radio access network device. It should be noted that when the first remapping information includes only an identifier of one second network slice, the first remapping information indicates that the PDU sessions, in the first network slice, of the plurality of terminal devices connected to the radio access network device are to be remapped to the second network slice. When the first remapping information includes identifiers of at least two second network slices, the first remapping information indicates the radio access network device to remap the PDU sessions, in the first network slice, of the plurality of terminal devices connected to the radio access network device to one of the at least two second network slices. It may be understood that the core network device may send the first remapping information to one or more radio access network devices, so that PDU sessions of terminal devices connected to the one or more radio access network devices are remapped from the first network slice to the second network slice.

It should be noted that after the terminal device initiates an access request for the first network slice, when a network resource of the first network slice is not overloaded, the core network device establishes one PDU session for the terminal device, and associates the PDU session with the first network slice, so that the PDU session becomes a link that provides PDU exchange between the terminal device and a data network (data network, DN) of the first network slice, and the terminal device further obtains the service of the first network slice by using the PDU session. The access request for the first network slice may be carried in a PDU session establishment request (PDU session establishment request) message of the terminal device. For example, if the PDU session establishment request message of the terminal device includes the identifier of the first network slice, the PDU session establishment request message indicates the terminal device to initiate the access request for the first network slice. An access request for one network slice is used by the terminal device to request to access the network slice.

When a network resource of the first network slice is overloaded, the core network device may remap the PDU session from the first network slice to the second network slice, so that the core network device implements the service, in the first network slice, of the terminal device by using the network resource of the second network slice. Remapping the PDU session from the first network slice to the second network slice may be replacing the network resource that is in the first network slice and that carries the PDU session with the network resource in the second network slice. A network resource includes a network resource on a core network side and a network resource on an access network side. Specifically, the core network device remaps the PDU session from the first network slice to the second network slice, so that a network resource that is on the core network side and that carries the PDU session is replaced with a network resource of the second network slice. The radio access network device reconfigures a radio bearer configuration corresponding to the PDU session from the first network slice to the second network slice, so that a network resource that is on the access network side and that carries the PDU session is replaced with a network resource of the second network slice.

The core network device may send the first remapping information to the radio access network device when a network status of the first network slice satisfies a first preset condition. In some embodiments, the first preset condition is that a remaining network resource value of the first network slice is less than or equal to a first threshold, or a load value of the first network slice is greater than or equal to a second threshold. For example, the first threshold is 15%, and the second threshold is 90%. When the remaining network resource value of the first network slice is less than or equal to 15%, or the load value of the first network slice is greater than or equal to 90%, the core network device sends the first remapping information to the radio access network device. In some other embodiments, the preset condition is that information about the network status of the first network slice indicates that the network resource of the first network slice is insufficient or load of the first network slice is excessively heavy.

In an optional implementation, a data structure of the first remapping information is shown in the following Table 1.

Table 1

| First remapping information | |
|---|---|
| >Identifier of the first network slice | |
| >Identifier list of the second network slice | Including the identifier of the at least one second network slice |

The first remapping information may be transmitted by using an overload start (overload start) message of the NG interface application protocol (NG application protocol, NGAP). The overload start message indicates that the first network slice is overloaded and indicates the radio access network device to remap the PDU session in the first network slice to the second network slice. Alternatively, the first remapping information may be transmitted by using another NGAP message, for example, PDU session modification request information.

302. The radio access network device determines that the session, in the first network slice, of the terminal device is to be remapped to the second network slice.

After receiving the first remapping information, the radio access network device determines that the PDU sessions of the plurality of terminal devices connected to the radio access network device are to be remapped from the first network slice to the second network slice. When the first remapping information includes the identifier of the first network slice and an identifier of one second network slice, the radio access network device determines that the PDU sessions, in the first network slice, of the plurality of terminal devices are to be remapped to the second network slice. When the first remapping information includes the identifier of the first network slice and identifiers of at least two second network slices, the radio access network device determines that the PDU sessions, in the first network slice, of the plurality of terminal devices are to be remapped to one of the at least two second network slices.

In an optional implementation, when the first remapping information includes the identifier of the first network slice and the identifiers of the at least two second network slices, the radio access network device may select one network slice from the at least two second network slices depending on whether the radio access network device supports the second network slice. The selected network slice is used to carry the PDU session in the first network slice. For example, when the at least two second network slices include a network slice A and a network slice C, and the radio access network device supports the network slice A but does not support the network slice C, the radio access network device determines that the PDU session of the terminal device is to be remapped to the network slice A.

In another optional implementation, the radio access network device may alternatively select one network slice from the at least two second network slices based on a remaining radio resource value of the second network slice in the radio access network device. Specifically, a first subset is a subset of the at least two second network slices. When remaining radio resource values of all network slices in the first subset are greater than a third threshold, the radio access network device determines that the PDU session of the terminal device is to be remapped from the first network slice to one network slice in the first subset. The remaining radio resource value is a ratio of a currently available radio resource of the network slice to total available radio resources of the network slice. The radio resource may be a resource block (resource block, RB), a time domain resource, a frequency domain resource, or another radio resource. This is not limited herein. For example, the third threshold is 50%. When load values of all the network slices in the first subset are greater than 50%, the radio access network device determines that the PDU session of the terminal device is to be remapped from the first network slice to one network slice in the first subset.

In still another optional implementation, the radio access network device may alternatively select one network slice from the at least two second network slices based on a quality of service (quality of service, QoS) parameter of the second network slice. The QoS parameter includes but is not limited to one of the following parameters: a delay, a bandwidth, and a packet loss rate. Specifically, when the QoS parameter of the second network slice satisfies a second preset condition, the radio access network device determines that the PDU session, in the first network slice, of the terminal device is to be remapped to the second network slice. The second preset condition is that at least one QoS parameter of the second network slice falls within a parameter range. For example, in some embodiments, when the delay of the second network slice is less than or equal to a fourth threshold, the bandwidth of the second network slice is greater than or equal to a fifth threshold, or the packet loss rate of the second network slice is less than or equal to a sixth threshold, the radio access network device determines that the PDU session, in the first network slice, of the terminal device is to be remapped to the second network slice. For example, if the fourth threshold is 300 milliseconds, the fifth threshold is 4048 bit/s, and the sixth threshold is 3%, when the delay of the second network slice is less than or equal to 300 milliseconds, the bandwidth of the second network slice is greater than or equal to 4048 bit/s, or the packet loss rate of the second network slice is less than or equal to 3%, the radio access network device determines that the PDU session, in the first network slice, of the terminal device is to be remapped to the second network slice. In some other embodiments, when the delay of the second network slice is less than or equal to the fourth threshold, and the bandwidth of the second network slice is greater than or equal to the fifth threshold, the radio access network device determines that the PDU session, in the first network slice, of the terminal device is to be remapped to the second network slice.

It may be understood that the radio access network device may alternatively select one network slice from the at least two second network slices with reference to at least two performance indicators of the second network slice. For example, the radio access network device selects one network slice from the at least two second network slices with reference to load statuses and QoS parameters of the second network slices. The radio access network device may alternatively select one network slice from the at least two second network slices based on other indicators of the second network slices, for example, network resources that are of the second network slices and that are on the access network side. The indicator of the second network slice is not limited herein, and may be adjusted based on an actual situation.

303. The radio access network device sends first indication information to the core network device.

When determining that the PDU session, in the first network slice, of the connected terminal device is to be remapped to the second network slice, the radio access network device sends the first indication information to the core network device. The first indication information includes the identifier of the first network slice and an identifier of one second network slice. When the first indication information includes only the identifier of the first network slice and the identifier of the second network slice, the first indication information indicates the core network device to remap the PDU sessions, in the first network slice, of all the terminal devices connected to the radio access network device to the second network slice. In some embodiments, in addition to the identifier of the first network slice and the identifier of the second network slice, the first indication information further includes an identifier of a terminal device, indicating to remap the session, in the first network slice, of the terminal device to the second network slice. The radio access network device adds an identifier of at least one terminal device to the first indication information, so that sessions, in the first network slice, of some terminal devices connected to the radio access network device can be remapped to the second network slice. For example, the radio access network device may separately remap PDU sessions, in the first network slice, of different terminal devices to different second network slices based on a policy of the radio access network device and a context of the connected terminal devices.

It should be noted that if a radio resource, in the radio access network device, of any one of the at least one second network slice cannot support all terminal devices that access the first network slice through the radio access network device, the radio access network device may add the identifier of the at least one terminal device to the first indication information, to remap sessions, in the first network slice, of some terminal devices connected to the radio access network device to the second network slice. In an optional implementation, the radio access network device may further send fourth indication information to the core network device, where the fourth indication information indicates that the PDU sessions, in the first network slice, of the plurality of terminal devices connected to the radio access network device are to be remapped to different second network slices, so that the sessions, in the first network slice, of all the terminal devices connected to the radio access network device are remapped to the second network slices. The fourth indication information may include identifiers of the plurality of terminal devices and an identifier of a second network slice corresponding to the identifier of each terminal device. In this embodiment, the fourth indication information indicates that the PDU sessions of the different terminal devices connected to the radio access network device are to be remapped to the corresponding second network slices.

The first indication information may be carried in a PDU session modify indication (PDU session resource modify indication) message, or may be carried in another existing NGAP interface message or a newly defined NGAP interface message.

304. The core network device remaps the PDU session, in the first network slice, of the terminal device to the second network slice.

After receiving the first indication information of the radio access network device, the core network device remaps the PDU sessions, in the first network slice, of the plurality of terminal devices connected to the radio access network device to the second network slice. In some embodiments, when the first indication information does not include an identifier of a terminal device, the core network device remaps the PDU sessions, in the first network slice, of all the terminal devices connected to the radio access network device from the first network slice to the second network slice. In some other embodiments, when the first indication information includes an identifier of a terminal device, the core network device remaps, to the second network slice, a session, in the first network slice, of the terminal device indicated by the identifier of the terminal device. After the core network device remaps the PDU session, in the first network slice, of the terminal device to the second network slice, the core network device provides, for the terminal device by using the second network slice, the service originally belonging to the first network slice.

305. The core network device sends PDU session modification complete indication information to the radio access network device.

The PDU session modification complete indication information indicates that the PDU session, in the first network slice, of the terminal device has been migrated to the second network slice. The PDU session modification complete indication message may be a PDU session resource modify confirm (PDU session resource modify confirm) message in the NGAP message, or may be another existing NGAP interface message or a newly defined NGAP message. It should be understood that the core network device sends the PDU session modification complete indication information to each terminal that is connected to the radio access network device and whose PDU session is remapped.

306. The radio access network device sends a first reconfiguration message to the terminal device.

After receiving the PDU session modification complete indication information, the radio access network device sends the first reconfiguration message to the terminal device. For example, the first reconfiguration message is a radio resource control (radio resource control, RRC) reconfiguration message (RRC reconfiguration message). The first reconfiguration message includes configuration information of a second radio bearer. The second radio bearer is used by the terminal device to access the second network slice. The terminal device originally accesses the first network slice by using a first radio bearer. The radio access network device uses configuration information of the first radio bearer as the configuration information of the second radio bearer. The first reconfiguration message indicates the terminal device to access the second network slice based on the configuration information of the second radio bearer, so that after the terminal device accesses the second network slice, quality of service at an access stratum is similar to or the same as quality of service provided by the first network slice.

The configuration information includes an access stratum QoS parameter of the network slice. For example, the access stratum QoS parameter includes at least one of a quality of service class identifier (QoS class identifier, QCI) and a guaranteed bit rate (guaranteed bit rate, GBR).

307. The terminal device replies to the radio access network device with a first reconfiguration complete message.

The terminal device accesses the second network slice based on the first reconfiguration message sent by the radio access network device, and sends the first reconfiguration complete message to the radio access network device. The first reconfiguration complete message indicates that the terminal device successfully accesses the second network slice.

Step 301 to step 304 are a process in which the core network device and the radio access network device determine to remap the sessions, in the first network slice, of the plurality of terminal devices connected to the radio access network device to the second network slice. Steps 305 to 307 are a process in which the terminal device accesses the second network slice. All the terminal devices connected to the radio access network device need to perform step 305 to step 307 to access the second network slice.

In this embodiment, based on the foregoing steps, the core network device remaps the PDU session in the first network slice to the second network slice, to perform load control on the first network slice when a core network resource of the first network slice is overloaded. In addition, service continuity of the terminal device is ensured, and performance experience of the terminal device is improved.

In an example implementation provided in this application, after the radio access network device receives the first remapping information, the radio access network device broadcasts the first remapping information, so that the terminal device that receives the first remapping information updates, when a to-be-requested network slice is the first network slice, the to-be-requested network slice to the second network slice. The to-be-requested network slice is a network slice to which the terminal device prepares to initiate an access request. In this implementation, the radio access network device broadcasts the first remapping information, so that a terminal device in an idle state or an inactive state accesses the second network slice when preparing to access the first network slice, and implements the service of the first network slice by using the second network slice. In this way, when the network resource of the first network slice is overloaded, the service that is of the terminal device and that originally belongs to the first network slice can be implemented by accessing the second network slice. Therefore, a quality of service requirement of the terminal device is ensured.

In still another optional implementation, the radio access network device broadcasts information about all network slices supported by the radio access network device and remapping information of each network slice. For example, if the radio access network device supports a network slice A and a network slice B, the radio access network device broadcasts information indicating that the radio access network device supports the network slice A and the network slice B, remapping information of the network slice A, and remapping information of the network slice B. Remapping information of one network slice includes an identifier of at least one to-be-remapped network slice of the network slice. A to-be-remapped network slice of one network slice supports a session in the network slice and a service of the network slice. A service, in the network slice, of the terminal device may be implemented by using a network resource of the to-be-remapped network slice of the network slice. In a scenario in which a network resource of one network slice is overloaded, for example, an access request initiated by a terminal device for the network slice is rejected, remapping information of one network slice indicates the terminal device to select, when a to-be-requested network slice is the network slice, one network slice from at least one to-be-remapped network slice of the network slice as an updated to-be-requested network slice. Therefore, when preparing to initiate the access request for the network slice, a terminal device in the idle state or the inactive state selects one network slice from the to-be-remapped network slice of the network slice to initiate the access request, to implement load control on the network slice. In a scenario in which a network resource of one network slice is not overloaded, remapping information of one network slice indicates a terminal device to select, when a to-be-requested network slice is the network slice, one network slice from the network slice and a to-be-remapped network slice of the network slice as an updated to-be-requested network slice. Therefore, when preparing to initiate the access request for the network slice, a terminal device in the idle state or the inactive state selects the network slice from the network slice or the to-be-remapped network slice of the network slice to initiate the access request, to prevent the network slice from being overloaded because terminal devices access the network slice together. The core network device may remap a session in one network slice to a to-be-remapped network slice of the network slice. Optionally, remapping information of one network slice alternatively indicates a terminal device to select, when a to-be-requested network slice is a to-be-remapped network slice of the network slice, one network slice from the network slice and all to-be-remapped network slices of the network slice to initiate an access request, to prevent the to-be-remapped network slice from being overloaded because terminal devices access the to-be-remapped network slice of the network slice together.

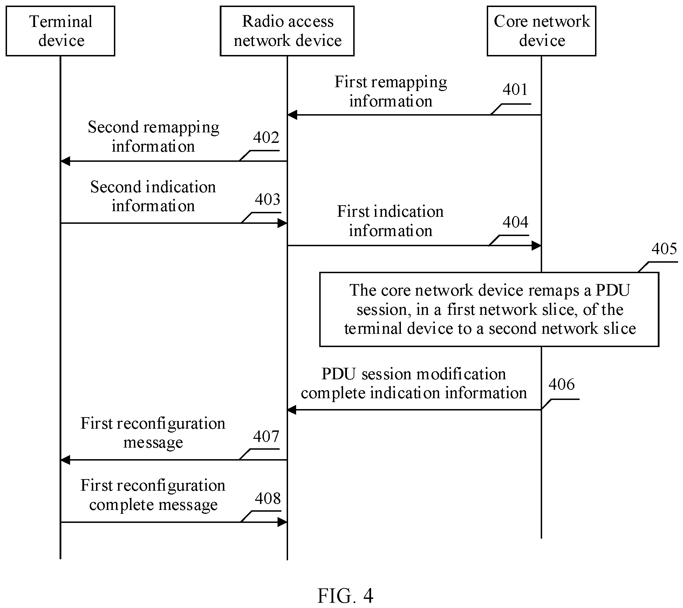

FIG. 4 is a schematic diagram of a network slice load control method according to an embodiment of this application. The method in FIG. 4 may be applied to the network architecture in FIG. 1. This embodiment may be applied to the following scenario: A terminal device is in a connected state, a first network slice is a network slice that has been accessed by the terminal device connected to a radio access network device, and the radio access network device supports at least one second network slice. The second network slice may be used to carry a PDU session in the first network slice. The method includes the following steps.

401. A core network device sends first remapping information to the radio access network device.

Step 401 is similar to step 301 in the foregoing embodiment. Details are not described herein again.

402. The radio access network device sends second remapping information to the terminal device.

After receiving the first remapping information from the core network device, the radio access network device sends the second remapping information to at least one terminal device connected to the radio access network device. The second remapping information includes an identifier of the first network slice and an identifier of at least one third network slice. The at least one third network slice is a part or all of the at least one second network slice. The second remapping information indicates the terminal device to stop initiating a service request to the first network slice and access the third network slice to implement, by using the third network slice, a service originally belonging to the first network slice. The radio access network device uses the part or all of the at least one second network slice indicated by the first remapping information as the third network slice, and sends the identifier of the at least one third network slice to the terminal device by using the second remapping information, so that the terminal device chooses whether to access the third network slice.

In some embodiments, the at least one third network slice is all of the at least one second network slice. After obtaining an identifier of the at least one second network slice from the first remapping information, the radio access network device forwards the identifier of the at least one second network slice to the terminal device by using the second remapping information. In some other embodiments, the at least one third network slice is a part or all of the at least one second network slice. The radio access network device selects the part or all of the at least one second network slice as the third network slice, and sends the identifier of the at least one third network slice to the terminal device by using the second remapping information. The radio access network device may select the third network slice from the at least one second network slice based on at least one of a support status for the second network slice, a QoS parameter, or a remaining radio resource value of the second network slice in the radio access network device. A specific implementation is similar to step 302 in which the radio access network device selects one network slice from the at least one second network slice. Details are not described herein again.

The radio access network device includes the second remapping information in an RRC message, so that the terminal device connected to the radio access network device receives the second remapping information. The RRC message may be an existing RRC message or a newly defined RRC message.

Optionally, a data structure of the second remapping information may be shown in the following Table 2.

**Table 2**

| Second remapping information | |
|---|---|
| >Identifier of the first network slice | |
| >Identifier list of the third network slice | Including the identifier of the at least one third network slice |

403. The terminal device sends second indication information to the radio access network device.

The second indication information indicates that the terminal device determines to access the third network slice. When determining to access the third network slice, the terminal device sends the second indication information to the radio access network device. The second indication information is sent, by using an RRC message, to the radio access network device connected to the terminal device. When the second remapping information includes an identifier of one third network slice, the second indication information indicates the terminal device to access the third network slice. When the second remapping information includes identifiers of at least two third network slices, the second indication information indicates that the terminal device determines to access one of the at least two third network slices. In some embodiments, when the second remapping information includes identifiers of at least two third network slices, the second indication information further includes an identifier of one target third network slice, and the second indication information indicates that the terminal device determines to access the target third network slice. The target third network slice is a network slice selected by the terminal device from the at least two third network slices.

The terminal device may select the target third network slice from the at least two network slices based on a type of a current service. For example, if the current service of the terminal device is a vehicle-to-everything service, the terminal device selects, from the at least two network slices, one network slice supporting the vehicle-to-everything service as the target third network slice. In some embodiments, the terminal device may alternatively select, from the at least two third network slices based on a currently started application, a network slice supporting the application as the target third network slice. For example, if the terminal device currently starts an application of a tenant A, and the at least two third network slices include a network slice A leased by the tenant A, the terminal device uses the network slice A as the target third network slice. In some other embodiments, the terminal device may alternatively select one network slice from the at least two third network slices as the target third network slice based on a QoS requirement of a current service and a QoS parameter of the third network slice. The QoS requirement includes but is not limited to at least one of the following: a delay requirement, a bandwidth requirement, and a packet loss rate requirement.

**Table 3**

| Second indication information | |
|---|---|
| >Identifier of the first network slice | Indicating the first network slice originally accessed by the terminal device |
| >Identifier of the third network slice | Indicating the third network slice that the terminal device determines to access |

Optionally, a possible data structure of the second indication information is shown in Table 3.

In an optional implementation, when determining not to access a to-be-remapped network slice of the first network slice, the terminal device determines not to send the second indication information to the radio access network device or determines to send fifth indication information to the radio access network device. The fifth indication information indicates that the terminal device rejects access to the third network slice.

In an optional implementation, after sending the second indication information to the radio access network device, the terminal device stops initiating a service request to the first network slice.

404. The radio access network device sends first indication information to the core network device.

In this embodiment, the radio access network device sends the first indication information to the core network device based on the second indication information of the terminal device. In some embodiments, if the radio access network device sends the second remapping information to one terminal device connected to the radio access network device, the first indication information includes an identifier of the terminal device, the identifier of the first network slice, and an identifier of a second network slice, where the identifier of the second network slice is the identifier that is of the third network slice and that is included in the second indication information, and the first indication information indicates the core network device to remap a PDU session, in the first network slice, of the terminal device to the second network slice. In some other embodiments, if the radio access network device sends the second remapping information to a plurality of terminal devices connected to the radio access network device, when the plurality of terminal devices are some terminal devices connected to the radio access network device, the first indication information includes an identifier of at least one terminal device, the identifier of the first network slice, and the identifier of the third network slice, and the first indication information indicates the core network device to remap a PDU session, in the first network slice, of the at least one terminal device to the third network slice. When the plurality of terminal devices are all terminal devices connected to the radio access network device, and all the terminal devices connected to the radio access network device determine to access one third network slice, the first indication information includes the identifier of the first network slice and an identifier of the third network slice. The first indication information indicates the core network device to remap PDU sessions, in the first network slice, of all the terminal devices connected to the radio access network device to the third network slice. When the plurality of terminal devices are all the network slices connected to the radio access network device, a part of terminal devices connected to the radio access network device determine to access the third network slice, and a terminal device other than the part of terminal devices determines not to access the third network slice, the first indication information includes an identifier of at least one terminal device, the identifier of the first network slice, and the identifier of the third network slice, and the first indication information indicates the core network device to remap a session, in the first network slice, of the at least one terminal device connected to the radio access network device to the third network slice. When the plurality of terminal devices connected to the radio access network device choose to access different third network slices, the first indication information includes the identifier of the first network slice, an identifier of at least one terminal device, and an identifier of a third network slice corresponding to an identifier of each terminal device. The first indication information indicates the core network device to remap a session, in the first network slice, of the terminal device to the corresponding third network slice.

405. The core network device remaps the PDU session, in the first network slice, of the terminal device to the second network slice.

The core network device remaps, based on the identifier that is of the third network slice and that is included in the first indication information, the PDU session, in the first network slice, of the terminal device to the second network slice indicated by the identifier of the third network slice. The second network slice is the third network slice that the terminal device determines to access.

406. The core network device sends PDU session modification complete indication information to the radio access network device.

407. The radio access network device sends a first reconfiguration message to the terminal device.

408. The terminal device replies to the radio access network device with a first reconfiguration complete message.

Specific implementation principles of steps 404 to 408 are similar to those of steps 302 to 306 in the foregoing embodiment. Details are not described herein again.

In this embodiment, the session of the at least one terminal device connected to the radio access network device is remapped to the second network slice, to reduce load of the first network slice. Steps 406 to 408 are a process in which one terminal device accesses the second network slice.

In this embodiment, after determining to access one second network slice, the terminal device sends the second indication information to the radio access network device, so that the radio access network device sends the first indication information to the core network device, to indicate the core network device to remap the PDU session, in the first network slice, of the terminal device to the second network slice that the terminal device determines to access. Load control on the first network slice is implemented, quality of service of the service of the terminal device is ensured, and performance experience of the terminal device is further improved.

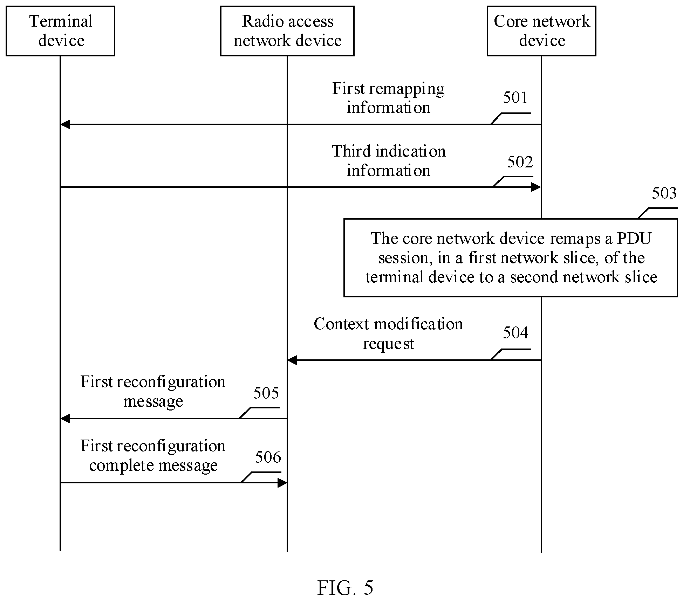

FIG. 5 is a schematic diagram of a network slice load control method according to an embodiment of this application. The method in FIG. 5 may be applied to the network architecture in FIG. 1. This embodiment of this application may be applied to the following scenario: A terminal device connected to a radio access network device is in a connected state, and a first network slice is a network slice that has been accessed by the terminal device. The radio access network device supports at least one second network slice. The second network slice may be used to carry a PDU session in the first network slice. The method may include the following steps.

501. A core network device sends first remapping information to the terminal device.

When the terminal device is in the connected state, the core network device sends the first remapping information to the terminal device by using a NAS message.

The first remapping information includes an identifier of the first network slice and an identifier of the at least one second network slice. In this embodiment, the first remapping information indicates the terminal device to select, from the at least one second network slice, one network slice that the terminal device determines to access, so that a PDU session, in the first network slice, of the terminal device is remapped to the second network slice. For a trigger condition for sending the first remapping information by the core network device and content and a function included in the first remapping information, refer to the descriptions in step 301 in the foregoing embodiment. Details are not described herein again.

502. The terminal device sends third indication information to the core network device.

After determining to access the second network slice indicated by the first remapping information, the terminal device sends the third indication information to the core network device by using a NAS message. The third indication information includes the identifier of the first network slice and an identifier of the second network slice. The third indication information indicates that the terminal device determines to access the second network slice, and indicate the core network device to remap the PDU session, in the first network slice, of the terminal device to the second network slice.

It should be noted that when the first remapping information includes the identifier of the first network slice and identifiers of at least two second network slices, the terminal device may select one network slice from the second network slices indicated by the first remapping information, and use an identifier of the selected network slice as the identifier, of the second network slice, included in the third indication information. An implementation principle of selecting the network slice from the at least two second network slices by the terminal device is similar to the implementation principle of selecting the target third network slice by the terminal device in step 403 in the foregoing embodiment. Details are not described herein again.

503. The core network device remaps the PDU session, in the first network slice, of the terminal device to the second network slice.

504. The core network device sends a context modification request of the terminal device to the radio access network device connected to the terminal device.

The context modification request indicates the radio access network device to modify an identifier of a network slice corresponding to the PDU session of the terminal device. After receiving the context modification request, the radio access network device changes the identifier of the network slice corresponding to the PDU session originally remapped to the first network slice by the terminal device from the identifier of the first network slice to the identifier of the second network slice. For example, the context modification request is a UE context modification request (UE context modification request).

A context is a context that is of the terminal device and that is stored in the radio access network device. The context may be a context of the PDU session, or may be a context of a radio bearer.

505. The radio access network device sends a first reconfiguration message to the terminal device.

506. The terminal device replies to the radio access network device with a first reconfiguration complete message.

In this embodiment, the core network device sends the first remapping information to the single terminal device by using the NAS message, so that the terminal device determines whether to access the second network slice, and may select an appropriate network slice from the at least one second network slice to implement a current service. This ensures continuity and quality of service of a service of the terminal device, and implements load control on the first network slice. In comparison with the foregoing embodiment, in this embodiment, it can be determined, through NAS signaling interaction between the core network device and the terminal device, that the session of the terminal device is to be remapped to the second network slice. Therefore, signaling interaction between the core network device and the radio access network device is reduced.

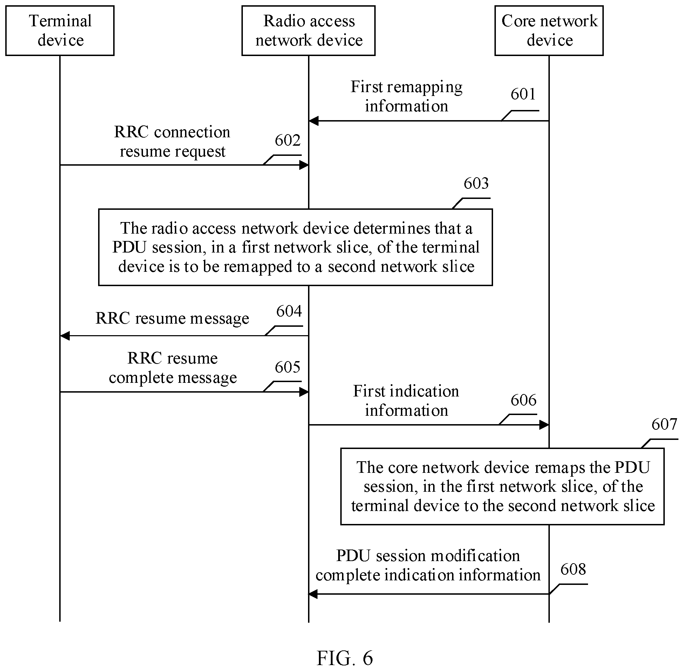

FIG. 6 is a schematic diagram of a network slice load control method according to an embodiment of this application. The method in FIG. 6 may be applied to the network architecture in FIG. 1. This embodiment is applied to the following scenario: When a terminal device is in an inactive state, a radio access network device to which the terminal device belongs supports at least one second network slice. The method may include the following steps.

601. A core network device sends first remapping information to the radio access network device.

Step 601 is similar to step 301 in the foregoing embodiment. Details are not described herein again.

602. The terminal device sends an RRC connection resume request to the radio access network device.

After determining that a PDU session in a first network slice needs to be resumed, the terminal device in the inactive state sends, to the radio access network device, the RRC connection resume request used to apply for resuming the PDU session in the first network slice. For example, the RRC connection resume request is an RRC resume request (RRC resume request) message or an RRC connection resume request (RRC connection resume request) message.

603. The radio access network device determines that the session, in the first network slice, of the terminal device is to be remapped to the second network slice.

The radio access network device uses a selected network slice as the second network slice that the radio access network device indicates the terminal device to access, and uses an identifier of the selected network slice as an identifier, of the second network slice, included in the first indication information.

An implementation process and a specific principle of selecting, one network slice from the at least one second network slice by the radio access network device are similar to those described in step 302 in the foregoing embodiment. Details are not described herein again.

604. The radio access network device replies to the terminal device with an RRC resume message.

The radio access network device replies to the terminal device with the RRC resume message, where the RRC resume message further includes the identifier of the second network slice. The RRC resume message indicates the terminal device to resume to a connection state and access the second network slice. For example, the RRC resume message is an RRC resume (RRC resume) message or an RRC connection resume (RRC connection resume) message.

605. The terminal device sends an RRC resume complete message to the radio access network device.

After resuming to the connected state and accessing the second network slice, the terminal device enters the connected state and sends the RRC resume complete message to the radio access network device. The terminal device in the connected state is a terminal device connected to the radio access network device. The RRC resume complete message indicates that the terminal device successfully accesses the second network slice. For example, the RRC resume complete message is an RRC resume complete (RRC resume complete) message or an RRC connection resume complete (RRC connection resume complete) message.

606. The radio access network device sends the first indication information to the core network device.

607. The core network device remaps the PDU session, in the first network slice, of the terminal device connected to the radio access network device to the second network slice.

608. The core network device sends PDU session modification complete indication information to the radio access network device.

Steps 606 to 608 are similar to steps 303 to 305 in the foregoing embodiment. Details are not described herein again.

In this embodiment, when the terminal device requests to resume the PDU session in the first network slice, the radio access network device indicates, by using the RRC resume message, the terminal device to resume the connection and access the second network slice, and indicates the core network device to remap the PDU session, in the first network slice, of the terminal device to the second network slice. Load control on the first network slice is implemented, and the RRC resume message indicates the terminal device to connect to the second network slice, so that continuity and quality of service of a service of the terminal device are ensured, and there is no need to initiate RRC connection reconfiguration for the terminal device. Therefore, signaling overheads are reduced.

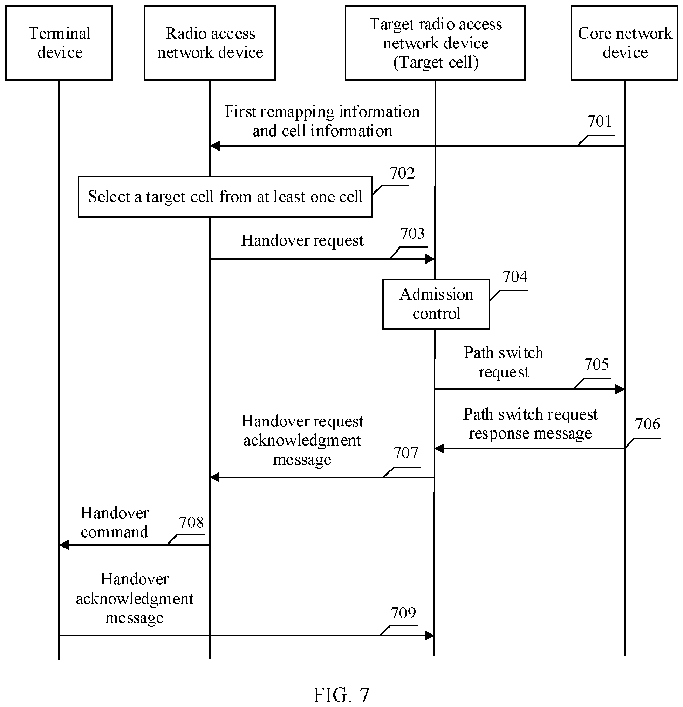

FIG. 7 is a schematic diagram of a network slice load control method according to an embodiment of this application. The method in FIG. 7 may be applied to the network architecture in FIG. 1. This embodiment is applied to the following scenario: A terminal device has accessed a first network slice, and a radio access network device to which the terminal device belongs does not support a second network slice. The method may include the following steps.

701. A core network device sends first remapping information and cell information to the radio access network device.

When the radio access network device does not support the second network slice, in addition to the first remapping information, the core network device further sends the cell information to the radio access network device. The cell information includes information about at least one first cell. Each first cell supports at least one second network slice. In some embodiments, all first cells indicated by the cell information support all second network slices. For example, the first remapping information includes identifiers of two second network slices: an identifier of a network slice A and an identifier of a network slice B, and the cell information includes information about three first cells: information about a cell 1, information about a cell 2, and information about a cell 3. In this embodiment, the cell 1, the cell 2, and the cell 3 all support the network slice A and the network slice B. In some other embodiments, a part of the at least one first cell supports only a part of the at least one second network slice. In this embodiment, the cell information further indicates a second network slice supported by each first cell. For example, the first remapping information includes identifiers of two second network slices: an identifier of a network slice A and an identifier of a network slice B, and a cell D in the at least one first cell supports only the network slice A. In this case, the cell information further indicates that the cell D supports the network slice A.

The information about the first cell includes at least one of the following information: a physical cell identifier (physical cell identifier, PCI), a radio access network area code (radio access network area code, RANAC), a closed access group identifier (closed access group identifier, CAG ID), a radio access network slice area identifier (radio access network slice area identifier, RSA ID), an identifier of the radio access network device, or a carrier identifier.

In an optional implementation, the cell information includes any one or more of the following information:

a PCI list, where the PCI list includes at least one PCI, and a cell corresponding to each PCI supports the second network slice;
a CGI list, where the CGI list includes at least one CGI, and a cell corresponding to each CGI supports the second network slice;
a PCI list and an identifier of a radio access network device associated with each PCI in the PCI list, where the radio access network device associated with each PCI supports the second network slice;
an identifier of one or more radio access network devices, where each radio access network device supports the second network slice;
a RAN AC list, where a cell corresponding to each RAN AC in the RAN AC list supports the second network slice;
a CAG ID list, where a cell corresponding to each CAG ID in the CAG ID list supports the second network slice;
an RSA ID list, where a cell corresponding to each RSA ID in the RSA ID list supports the second network slice; and
carrier information, where the carrier information includes an identifier of one or more carriers, and each carrier supports the second network slice; or carrier information and information about a cell corresponding to each carrier in the carrier information, where the carrier information includes one or more carriers, and each carrier supports the second network slice.

Each type of information indicates one type of first cell, and the terminal device flexibly accesses the first cell and the second network slice by using different types of cell information.

It should be noted that a part or all of the at least one first cell is a neighboring cell of a current serving cell of the terminal device. The radio access network device may indicate the terminal device to measure the part or all of the first cells, and indicate the terminal device to be handed over from the serving cell to the first cell.

When the radio access network device does not support the second network slice, the core network device may send the first remapping information and the cell information to the radio access network device when a network status of the first network slice satisfies a first preset condition. For content and functions included in the first preset condition and the first remapping information, refer to the descriptions in step 301 in the foregoing embodiment. Details are not described herein again.

702. The radio access network device selects a target cell from the at least one first cell.

The radio access network device may select the target cell from the at least one first cell based on the first remapping information, the cell information, and a measurement report. The measurement report may be a measurement report fed back by the terminal device after the radio access network device sends a cell measurement request to the terminal device, or may be a measurement report reported by the terminal device through periodic measurement. The cell measurement request indicates the terminal device to measure the neighboring cell or the first cell.

That the radio access network device selects the target cell from the at least one first cell based on the first remapping information, the cell information, and the measurement report may be that the radio access network device selects a target network slice from at least one second network slice indicated by the first remapping information, then the radio access network device determines, based on the cell information, a first cell supporting the target network slice, and finally, the radio access network device selects, based on signal quality of the first cell in the measurement report, the target cell from the first cell supporting the target network slice, where signal quality of the target cell satisfies a handover condition. In some embodiments, that the radio access network device selects the target cell from the at least one first cell based on the first remapping information, the cell information, and the measurement report may alternatively be that the radio access network device sorts the at least one first cell based on signal quality, to obtain a candidate cell whose signal quality satisfies a slice condition, then determines a target network slice from a network slice supported by the candidate cell, and finally, the radio access network device selects the target cell from one or more candidate cells that supports the target network slice.

In this embodiment of this application, the signal quality of the first cell may be reflected by using a reference signal received power (reference signal received power, RSRP) or reference signal received quality (reference signal received quality, RSRQ) of the first cell. Actually, the terminal device may alternatively reflect the signal quality of the first cell by measuring another attribute of the first cell. This is not limited in this embodiment of this application. There are many handover conditions. For example, the handover condition is that the signal quality of the first cell is greater than a seventh threshold. For another example, the handover condition is that a difference between the signal quality of the first cell and signal quality of the serving cell is greater than an eighth threshold. The foregoing two handover conditions are merely examples for description. Actually, the handover condition is not limited in this embodiment of this application. During specific implementation, the handover condition may be set based on a scenario.

703. The radio access network device initiates a handover request to a target radio access network device to which the target cell belongs.

The handover request includes a PDU session remapping request and a cell handover request. The PDU session remapping request requests to remap a PDU session, in the first network slice, of the terminal device to a second network slice supported by the target radio access network device. The PDU session remapping request includes an identifier of the first network slice, an identifier of the second network slice, and an identifier of the PDU session for which remapping is requested. The cell handover request requests to hand over the serving cell of the terminal device to the target cell. For example, the handover request may be a handover request (handover request) message.

704. The target radio access network device performs admission control.

The target radio access network device performs admission control on the terminal device based on resource usage of the second network slice and a load status of the target cell. The resource usage of the second network slice is resource usage of the second network slice on a target radio access network device side, for example, a remaining load value of the second network slice in the target radio access network device.

705. The target radio access network device sends a path switch request to the core network device.

When determining to allow the terminal device to access the target cell and the second network slice, the target radio access network device sends the path switch request to the core network device. For example, the path switch request is a path switch request (Path switch request) message. The path switch request includes the identifier of the PDU session, in the first network slice, of the terminal device, the identifier of the first network slice, and the identifier of the second network slice. The path switch request requests the core network device to perform path switch processing on the PDU session, in the first network slice, of the terminal device, so that the core network device remaps the PDU session, in the first network slice, of the terminal device to the second network slice.

706. The core network device sends a path switch request response message to the target radio access network device.

The core network device sends the path switch request response message to the target radio access network device. For example, the path switch request response message is a path switch request acknowledgment (path switch request acknowledgment) message or a path switch request response (path switch request response) message. The path switch request response message indicates that the PDU session, in the first network slice, of the terminal device is successfully remapped to the second network slice.

707. The target radio access network device sends a handover request acknowledgment message to the radio access network device.

After receiving a path switch success message from the core network device, the target radio access network device sends the handover request acknowledgment message to the radio access network device. For example, the handover request acknowledgment message may be a handover acknowledgment (handover acknowledgment) message or a handover request acknowledgment (handover request acknowledgment) message. The handover acknowledgment message includes a configuration parameter required by the terminal device to access the target cell and the identifier of the second network slice. For example, the configuration parameter required by the terminal device to access the target cell includes a PCI and frequency information of the target cell.

708. The radio access network device sends a handover command to the terminal device.

After the radio access network device receives the handover request acknowledgment message sent by the target radio access network device, the radio access network device sends the handover command to the terminal device. The handover command includes the configuration parameter required by the terminal device to access the target cell and the identifier of the second network slice, and the handover command indicates the terminal device to access the target cell and the second network slice. The handover command may be an RRC connection reconfiguration (RRC connection reconfiguration) message, or may be a handover command (handover command) message.

709. The terminal device sends a handover acknowledgment message to the target radio access network device.

The handover acknowledgment message may be a handover complete (handover complete) message, or may be an RRC connection reconfiguration complete (RRC connection reconfiguration complete) message.

Optionally, after the terminal device receives the handover command, the terminal device performs random access to the target radio access network device, to feed back the handover acknowledgment message to the target radio access network device, to indicate that the terminal device successfully accesses the target cell and the second network slice.

After accessing the target cell based on an RRC reconfiguration message, the terminal device sends an RRC reconfiguration complete message to the target radio access network device.

In this embodiment, after receiving the first remapping information and the cell information, the radio access network device sends the handover request to the target radio access network device. After performing admission control, the target radio access network device sends the handover acknowledgment message to the radio access network device, so that the radio access network device indicates the terminal device to access the target cell and the second network slice that belong to the target radio access network device, and indicates, by using the path switch message, the core network device to remap the PDU session, in the first network slice, of the terminal device to the second network slice. In this embodiment, when the radio access network device does not support the second network slice, the terminal device accesses the second network slice by using the target radio access network device. This ensures continuity and quality of service of a service of the terminal device, and implements load control on the first network slice.

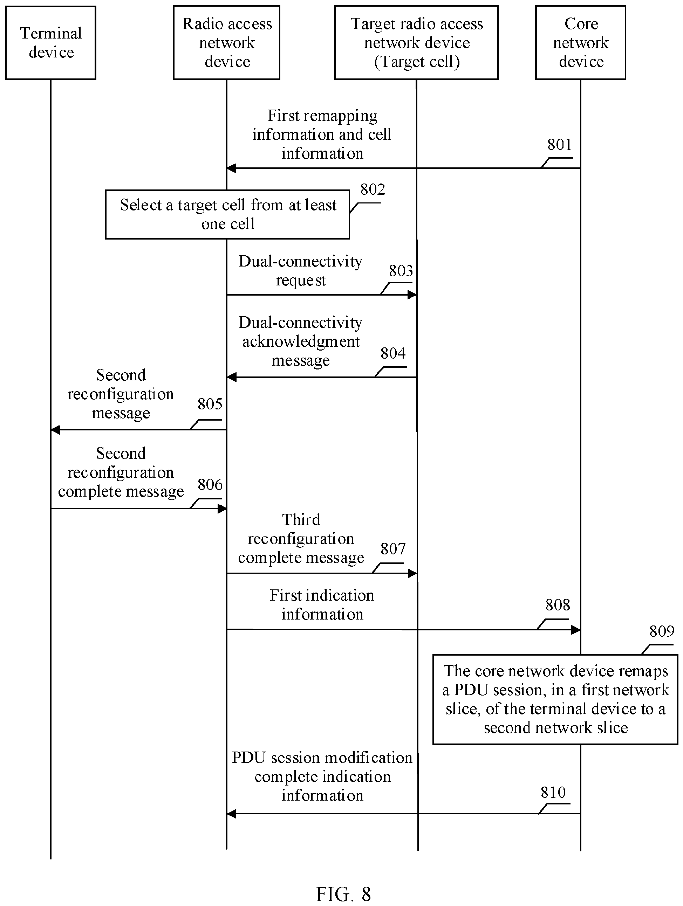

FIG. 8 is a schematic diagram of a network slice load control method according to an embodiment of this application. The method in FIG. 8 may be applied to the network architecture in FIG. 1. This embodiment is applied to the following scenario: A terminal device has accessed a first network slice, and a radio access network device to which the terminal device belongs does not support a second network slice. The method may include the following steps.

801. A core network device sends first remapping information and cell information to the radio access network device.

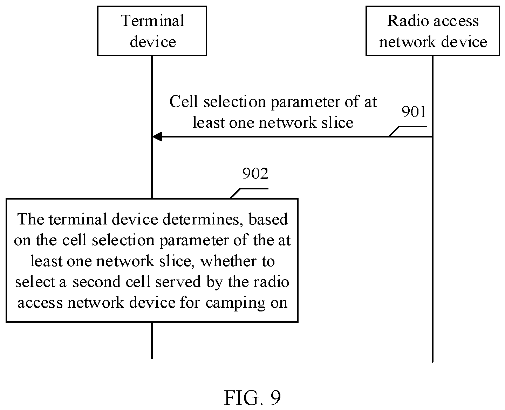

The cell information includes information about at least one first cell. For step 801, refer to the detailed descriptions corresponding to step 901 in the embodiment shown in FIG. 9. Details are not described herein again.

802. The radio access network device selects a target cell from the at least one first cell.

For step 802, refer to the detailed descriptions corresponding to step 902 in the embodiment shown in FIG. 9. Details are not described herein again.

803. The radio access network device sends a dual-connectivity request to a target radio access network device to which the target cell belongs.

The dual-connectivity request is used by the radio access network device to request the target radio access network device to use the target cell as a secondary cell (secondary cell, Scell) of the terminal device. For example, the dual-connectivity request is a secondary node addition request (secondary node addition request) message. The request message includes a PDU session remapping request. The PDU session remapping request includes an identifier of a PDU session for which remapping is requested, an identifier of the first network slice, and an identifier of a second network slice. The identifier of the PDU session for which remapping is requested includes an identifier of a PDU session, in the first network slice, of the terminal device. The PDU session remapping request requests to remap the PDU session, in the first network slice, of the terminal device to the second network slice supported by the target radio access network device.

804. The target radio access network device sends a dual-connectivity acknowledgment message to the radio access network device.

The dual-connectivity acknowledgment message indicates that the target radio access network device agrees to use the target cell as the secondary cell of the terminal device and agrees to remap the PDU session, in the first network slice, of the terminal device to the second network slice supported by the target cell. For example, the dual-connectivity acknowledgment message is a secondary radio access network device addition request acknowledgment message (SN Addition Request Acknowledge).

805. The radio access network device sends a second reconfiguration message to the terminal device.

The second reconfiguration message includes a configuration parameter required by the terminal device to use the target cell as the secondary cell and the identifier of the second network slice. The second reconfiguration message indicates the terminal device to use the target cell as the secondary cell, and indicates the terminal device to access the second network slice through the target cell. For example, the second reconfiguration message is an RRC connection reconfiguration (RRC connection reconfiguration) message.

In an example, the configuration parameter required by the terminal device to use the target cell as the secondary cell includes an air interface resource of the target cell, for example, a frequency and a bandwidth of the target cell.

806. The terminal device returns a second reconfiguration complete message to the radio access network device.

The second reconfiguration complete message indicates that the terminal device has configured the target cell as the secondary cell, and has accessed the second network slice through the target cell. For example, the second reconfiguration complete message is an RRC connection reconfiguration complete (RRC connection reconfiguration complete) message.

807. The radio access network device sends a third reconfiguration complete message to the target radio access network device.

The third reconfiguration complete message notifies the target radio access network device that the terminal device has configured the target cell as the secondary cell of the terminal device. For example, the third reconfiguration complete message is a secondary radio access network device reconfiguration complete (SN reconfiguration complete) message.

808. The radio access network device sends first indication information to the core network device.

809. The core network device remaps the PDU session, in the first network slice, of the terminal device connected to the radio access network device to the second network slice.

810. The core network device sends PDU session modification complete indication information to the radio access network device.

Steps 808 to 810 are similar to steps 303 to 305 shown in FIG. 3 in the foregoing embodiment. Details are not described herein again.

In this embodiment, if the radio access network device does not support the second network slice, the radio access network device sends the dual-connectivity request to the target radio access network device to which the target cell belongs, so that the terminal device uses the target cell as the secondary cell and accesses the second network slice through the target cell. In this implementation, load control on the first network slice is implemented, continuity and quality of service of a service of the terminal device are ensured, a delay in handing over the terminal device to the target cell is reduced by using dual connectivity, and performance experience of the terminal device is improved.

FIG. 9 is a schematic diagram of a network slice load control method according to an embodiment of this application. A radio access network device may send a cell selection parameter of a network slice, to control a quantity of terminal devices that access the network slice. The method may include the following steps.

901. The radio access network device sends a cell selection parameter of at least one network slice.

Specifically, the radio access network device broadcasts, in a second cell, a cell selection parameter of a network slice supported by the second cell. Alternatively, when the terminal device accesses the second cell, the radio access network device sends, to the terminal device by using an RRC message, the cell selection parameter of the network slice supported by the second cell. For example, the RRC message is an RRC release (RRC release) message. The second cell is a cell served by the radio access network device, and supports a part or all of the at least one network slice. The cell selection parameter of the network slice indicates the terminal device to determine, based on the cell selection parameter of the network slice when the terminal device performs cell selection and a to-be-requested network slice of the terminal device is the network slice, whether to select the second cell that supports the network slice for camping on.

For example, cells served by the radio access network device include a cell 1, a cell 2, and a cell 3. The radio access network device sends cell selection parameters of three network slices. The three network slices are a network slice A, a network slice B, and a network slice C. The cell 1 supports the network slice A and the network slice C. The cell 2 does not support the network slice A, the network slice B, and the network slice C. The cell 3 supports the network slice A, the network slice B, and the network slice C. In this case, the cell 1 and the cell 3 are third cells, the radio access network device broadcasts the cell selection parameter of the network slice A and the cell selection parameter of the network slice C in the cell 1, the radio access network device does not broadcast the cell selection parameter of the network slice in the cell 2, and the radio access network device broadcasts the cell selection parameter of the network slice A, the cell selection parameter of the network slice B, and the cell selection parameter of the network slice C in the cell 3.

The cell selection parameter of the network slice includes at least one of a minimum cell received power level ($Q_{rxlevmin, \text{S-NSSAI}}$) of the network slice and a minimum cell quality level ($Q_{qualmin, \text{S-NSSAI}}$) of the network slice. The cell selection parameter of the network slice is applied to an S criterion for cell selection, to obtain an S criterion of the network slice. In some embodiments, the S criterion of the network slice satisfies a formula 1: $\text{Srxlev}_{\text{S-NSSAI}} > 0$ and a formula 2: $\text{Squal}_{\text{S-NSSAI}} > 0$, where

$$\text{Srxlev}_{\text{S-NSSAI}} = Q_{rxlevmeas} - \left( Q_{rxlevmin, \text{ S-NSSAI}} + Q_{rxlevminoffset} \right) - P_{compensation} - Qoffset_{temp} \quad ,$$

and

$$\text{Squal}_{\text{S-NSSAI}} = Q_{qualmeas} - \left( Q_{qualmin, \text{ S-NSSAI}} + Q_{qualminoffset} \right) - Qoffset_{temp}.$$

In some other embodiments, the S criterion to which the cell selection parameter of the network slice is applied satisfies the formula 1 or the formula 2.

It may be understood that when the terminal device performs cell selection, if the terminal device needs to access a network slice supported by the radio access network device, and the terminal device receives a cell selection parameter of the network slice, the terminal device needs to determine whether the second cell served by the radio access network device satisfies an S criterion of the network slice. The cell selection parameter of the network slice indicates the terminal device to select, when the second cell satisfies the S criterion of the network slice, the second cell for camping on, and access the network slice through the second cell.

Definitions of parameters in the formula 1 and the formula 2 are shown in the following Table 4:

**Table 4**

| | |
|---|---|
| $\text{Srxlev}_{\text{S-NSSAI}}$ | Cell selection received power value (RX level value) of a network slice S-NSSAI defined in this embodiment |
| $\text{Squal}_{\text{S-NSSAI}}$ | Cell selection quality value of the network slice S-NSSAI defined in this embodiment |
| $Q_{rxlevmin, \text{ S-NSSAI}}$ | Minimum cell received power level of the network slice S-NSSAI defined in this embodiment |
| $Q_{qualmin, \text{S-NSSAI}}$ | Minimum cell quality level of the network slice S-NSSAI defined in this embodiment |
| $Qoffset_{temp}$ | Offset that is temporarily applied to a cell and that is specified in an existing communication protocol |
| $Q_{rxlevmeas}$ | Reference signal received power (reference signal received power, RSRP) of a cell measured by the terminal device |
| $Q_{qualmeas}$ | Reference signal received quality (reference signal received quality, RSRQ) of the cell measured by the terminal device |

(continued)

| $Q_{rxlevminoffset}$ | It is specified in an existing communication protocol that $Q_{rxlevminoffset}$ is an offset of a minimum received power value.<br><br>$Q_{rxlevminoffset}$ = q-RxLevMinOffset<br>or $Q_{rxlevminoffset}$ = 0<br>The parameter q-RxLevMinOffset is carried in a system information block 1 (system information block 1, SIB 1) broadcast in the cell. |
|---|---|
| $Q_{qualminoffset}$ | It is specified in an existing communication protocol that $Q_{qualminoffset}$ is an offset of a minimum quality value.<br><br>$Q_{qualminoffset}$ =q-QualMinOffse or $Q_{qualminoffset}$ =0<br>q-QualMinOffse is carried in the SIB 1. |
| $P_{compensation}$ | It is specified in an existing communication protocol that $P_{compensation}$ is a compensation value of the minimum received power value. |

It should be noted that the at least one network slice is a subset of all network slices supported by the radio access network device. For example, the radio access network device supports a network slice A, a network slice B, and a network slice C. The radio access network device may send only a cell selection parameter of one of the network slice A, the network slice B, or the network slice C. For example, the radio access network device sends only the cell selection parameter of the network slice A. The radio access network device may alternatively send cell selection parameters of any two of the network slice A, the network slice B, or the network slice C. For example, the radio access network device sends the cell selection parameter of the network slice A and the cell selection parameter of the network slice C. The radio access network device may alternatively send the cell selection parameter of the network slice A, the cell selection parameter of the network slice B, and the cell selection parameter of the network slice C.

In an optional implementation, before the radio access network device sends the cell selection parameter of the network slice, the radio access network device adjusts the cell selection parameter of the network slice, to control a quantity of terminal devices that are in the second cell and that access the network slice. In some embodiments, when the radio access network device sends the cell selection parameter of the network slice, the radio access network device increases a minimum received power level of the network slice or a minimum quality level of the second cell of the network slice, to increase difficulty of selecting, by the terminal device, the second cell corresponding to the network slice for camping on, and restrict the terminal device from accessing the network slice. The radio access network device decreases the minimum received power level of the network slice or the minimum quality level of the second cell of the network slice, to reduce difficulty of selecting, by the terminal device, the second cell corresponding to the network slice for camping on. In some other embodiments, when the radio access network device sends a cell selection parameter of the first network slice and a cell selection parameter of the second network slice, the radio access network device adjusts at least one of the cell selection parameter of the first network slice or the cell selection parameter of the second network slice, to control a quantity of terminal devices that access the first network slice and the second network slice. For example, the radio access network device increases a minimum received power level of the first network slice or a minimum quality level of the second cell of the first network slice, so that it is more difficult for the terminal device to access the network slice and easier for the terminal device to access the second network slice. Therefore, a quantity of terminal devices that access the first network slice is limited. The radio access network device increases a minimum received power level of the second network slice or a minimum cell quality level of the second network slice, so that it is easier for the terminal device to access the first network slice and it is more difficult for the terminal device to access the second network slice. Therefore, a quantity of terminal devices that access the second network slice is limited. The radio access network device may alternatively increase a minimum received power level of the first network slice or a minimum cell quality level of the network slice, and decrease a minimum received power level of the second network slice or a minimum cell quality level of the second network slice, so that it is easier for the terminal device to access the second network slice. Therefore, a quantity of terminal devices that access the first network slice is limited.

The radio access network device may adjust the cell selection parameter of the network slice based on a load value or a remaining network resource value of the network slice. For example, when the load value of the network slice exceeds a second threshold, or the remaining network resource value of the network slice is less than a first threshold, the radio access network device increases the minimum received power level of the network slice or the minimum quality level of the second cell of the network slice. In some other embodiments, the radio access network device may alternatively adjust the cell selection parameter of the network slice based on indication information sent by the core network device. For example, after the radio access network device receives the indication information that is sent by the core network device and that indicates that the network slice is overloaded, the radio access network device increases the minimum received power level of the network slice or the minimum quality level of the second cell of the network slice.

902. The terminal device determines, based on the cell selection parameter of the at least one network slice, whether to select the second cell served by the radio access network device for camping on.

When the to-be-requested network slice is one or more of the at least one network slice, the terminal device determines, based on the cell selection parameter of the at least one network slice, whether to select the second cell served by the radio access network device for camping on.

Specifically, when the terminal device needs to access one network slice, where the network slice is the to-be-requested network slice of the terminal device, and receives a cell selection parameter that is of the network slice and that is sent by the radio access network device, the terminal device determines, when performing cell selection, whether the second cell served by the radio access network device satisfies an S criterion of the network slice. When determining that the second cell served by the radio access network device satisfies the S criterion of the network slice, the terminal device may select the second cell for camping on, and initiate, to the radio access network device, a request for accessing the network slice.

In an optional implementation, the terminal device selects, based on priorities of network slices, a fourth network slice having a highest priority, and selects a cell that supports the fourth network slice for camping on, so that when the terminal device needs to access the fourth network slice, the terminal device can initiate, to the cell that is camped on, a request for accessing the fourth network slice, to quickly obtain a service of the fourth network slice. When receiving a cell selection parameter of the fourth network slice, the terminal device determines, based on the cell selection parameter of the fourth network slice, whether to select the second cell served by the radio access network device for camping on. The priority of the network slice may be a priority provided by the core network device. The core network device provides, in an allowed NSSAI (allowed NSSAI) of a registration accept message, a priority corresponding to each network slice. The priority of the network slice is included in subscription information of the terminal device, and the subscription information of the terminal device is stored in the core network device. Alternatively, the priority of the network slice may be a priority that is of the network slice and that is determined by the terminal device based on historical usage of an application (application, APP). In a possible case, the terminal device associates an S-NSSAI identifier of the network slice with an identifier of the APP according to a user equipment routing selection policy (user equipment routing selection policy, URSP) and a network slicing selection policy (network slicing selection policy, NSSP), to obtain a historical access status of the network slice based on the historical usage of the APP. The terminal device sorts the priorities of the network slices based on historical access statuses of the network slices, and uses a network slice with a largest quantity of historical access times as a network slice having a highest priority.

In this embodiment, the terminal device is restricted, by using the cell selection parameter of the network slice, from selecting a cell that supports the network slice for camping on, so as to implement load control on the network slice on an access network side.

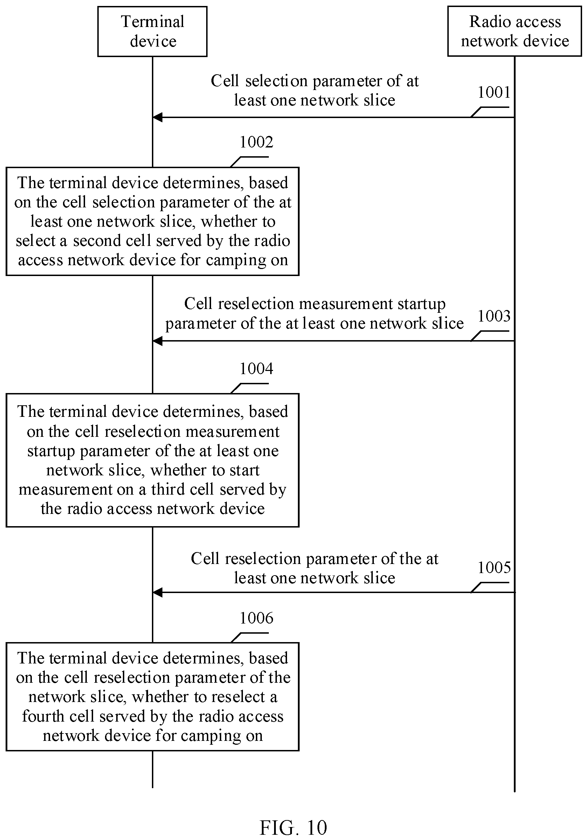

FIG. 10 is a schematic diagram of a network slice load control method according to an embodiment of this application. The method is a further supplement to and improvement of the method shown in FIG. 9. A radio access network device may send a cell selection parameter, a cell reselection measurement startup parameter, and a cell reselection parameter of a network slice, to control a quantity of terminal devices that access the network slice. The method may include the following steps.

1001. The radio access network device sends a cell selection parameter of at least one network slice.

1002. A terminal device determines, based on the cell selection parameter of the at least one network slice, whether to select a second cell served by the radio access network device for camping on.

Steps 1001 and 1002 are similar to steps 901 and 902 in the foregoing embodiment. Details are not described herein again.

1003. The radio access network device sends a cell reselection measurement startup parameter of the at least one network slice.

Specifically, the radio access network device broadcasts, in a third cell, a cell reselection measurement startup parameter of a network slice supported by the third cell. Alternatively, when the terminal device accesses the third cell, the radio access network device sends, to the terminal device by using an RRC message, the cell reselection measurement startup parameter of the network slice supported by the third cell. The third cell is a cell served by the radio access network device, and supports a part or all of the at least one network slice. The cell reselection measurement startup parameter of the network slice indicates the terminal device to determine, when a to-be-requested network slice is the network slice, whether to start measurement on the third cell served by the radio access network device.

For example, that the radio access network device broadcasts, in a third cell, a cell reselection measurement startup parameter of a network slice supported by the third cell is specifically as follows: The third cell served by the radio access network device includes a cell 1 and a cell 2, the cell 1 supports a network slice A, and the cell 2 supports a network slice B. In this case, the radio access network device broadcasts a cell reselection measurement startup parameter of the network slice A in the cell 1, and broadcasts a cell reselection measurement startup parameter of the network slice B in the cell 2.

The cell reselection measurement startup parameter of the network slice includes an intra-frequency measurement startup threshold of the network slice and an inter-frequency/inter-RAT measurement startup threshold of the network slice. The intra-frequency measurement startup threshold of the network slice includes at least one of a first power measurement startup threshold or a first quality measurement startup threshold. The inter-frequency/inter-RAT measurement startup threshold of the network slice includes at least one of a second power measurement startup threshold or a second quality measurement startup threshold. The cell reselection measurement startup parameter of the network slice indicates the terminal device to start measurement on the third cell when signal quality of a serving cell satisfies the cell reselection measurement startup parameter of the network slice. The signal quality of the serving cell includes a cell selection received power value of the serving cell and a cell selection quality value of the serving cell.

Specifically, the terminal device currently camps on the serving cell, and the third cell is a same-priority cell or a low-priority cell of the serving cell. If the third cell is an intra-frequency cell of the serving cell, the cell reselection measurement startup parameter of the network slice indicates the terminal device to start measurement on the third cell when the cell selection received power value of the serving cell is not greater than a first power measurement startup threshold or the cell selection quality value of the serving cell is not greater than a first quality threshold. For example, it is assumed that the third cell is an intra-frequency cell of the serving cell, the serving cell supports a network slice S-NSSAI, a first power measurement startup threshold of the network slice S-NSSAI is $\mathrm{SintraSearchP}_{\text{S-NSSA}}$ , a first quality measurement startup threshold of the network slice S-NSSAI is $\mathrm{SintraSearchQ}_{\text{S-NSSAI}}$, a cell selection received power value of the serving cell is $\mathrm{Srxlev}_{\text{service}}$, and a cell selection quality value of the serving cell is $\mathrm{Squal}_{\text{service}}$. In this case, the cell reselection measurement startup parameter of the network slice S-NSSAI indicates the terminal device to start measurement on the third cell when $\mathrm{Srxlev}_{\text{service}} \leq \mathrm{SintraSearchP}_{\text{S-NSSAI}}$ or $\mathrm{Squal}_{\text{service}} \leq \mathrm{SintraSearchQ}_{\text{S-NSAAI}}$. If the third cell is an inter-frequency cell or an inter-RAT cell of the serving cell, the cell reselection measurement startup parameter of the network slice indicates the terminal device to start measurement on the third cell when cell selection received quality of the serving cell is not greater than a second power measurement startup threshold or a cell selection power value of the serving cell is not greater than a second quality measurement startup threshold. For example, a second power measurement startup threshold of the network slice S-NSSAI is $\mathrm{SnonintrasearchP}_{\text{S-NSSAI}}$, and a second quality measurement startup threshold of the network slice S-NSSAI is $\mathrm{SnonintrasearchQ}_{\text{S-NSSAI}}$. If the third cell is an inter-frequency cell or an inter-RAT cell of the serving cell, the cell reselection measurement startup parameter of the network slice indicates the terminal device to start measurement on the third cell when $\mathrm{Srxlev}_{\text{service}} \leq \mathrm{SnonintrasearchP}_{\text{S-NSSAI}}$ or $\mathrm{Srxlev}_{\text{service}} \leq \mathrm{SnonintrasearchQ}_{\text{S-NSSAI}}$.

It is specified in an existing communication protocol that in an S criterion for cell selection, a cell selection received power value of a cell satisfies the following formula:

$$\mathrm{Srxlev} = \mathrm{Qrxlevmeas} - (\mathrm{Qrxlevmin} + \mathrm{Qrxlevminoffset}) - \mathrm{Pcompensation} - \mathrm{Qoffsettemp}.$$

Qrxlevmeas is a cell received power value obtained by the terminal device through measurement, Qrxlevmin is a minimum received power value specified for the cell, Qrxlevminoffset is an offset of a minimum power value, Pcompensation is a compensation value of the minimum received power value, and Qoffsettemp is an offset that is temporarily applied to the cell and that is specified in a protocol.

A cell selection quality value of the cell satisfies the following formula:

$$\mathrm{Squal} = \mathrm{Qqualmeas} - (\mathrm{Qqualmin} + \mathrm{Qqualminoffset}) - \mathrm{Qoffsettemp}.$$

Qqualmeas is a cell quality value obtained by the terminal device through measurement, Qqualmin is a minimum quality value specified for the cell, Qqualminoffset is an offset of the minimum quality value, and Qoffsettemp is an offset that is temporarily applied to the cell and that is specified in a protocol.

1004. The terminal device determines, based on the cell reselection measurement startup parameter of the at least one network slice, whether to start measurement on the third cell served by the radio access network device.

When the terminal device needs to access one or more of the at least one network slice, the terminal device determines, based on the cell reselection measurement startup parameter of the at least one network slice, whether to start measurement on the third cell served by the radio access network device. It may be understood that the cell reselection measurement startup parameter of the network slice further indicates at least one third cell that is served by the radio access network device and that supports the network slice.

It should be noted that, currently, cells are classified into high-priority cells, same-priority cells, and low-priority cells based on priorities. The high-priority cell may be an inter-frequency cell or an inter-RAT cell of a cell on which the terminal device currently camps. The same-priority cell may be an intra-frequency cell or an inter-frequency cell of the cell on which the terminal device currently camps. The low-priority cell may be an inter-frequency cell or an inter-RAT cell of the cell on which the terminal device currently camps.

In an optional implementation, if the third cell detected by the terminal device is a high-priority cell, the terminal device starts measurement on the high-priority third cell. If the third cell detected by the terminal device is a same-priority intra-frequency cell, the terminal device starts measurement on the third cell when the signal quality of the serving cell is less than an intra-frequency measurement startup threshold of the network slice. If the third cell detected by the terminal device is a same-priority inter-frequency cell, the terminal device starts measurement on the third cell when the signal quality of the serving cell is less than an inter-frequency/inter-RAT measurement startup threshold of the network slice. If the third cell detected by the terminal device is a low-priority third cell, the terminal device starts measurement on the third cell when the signal quality of the serving cell does not satisfy an inter-frequency/inter-RAT measurement startup threshold of the network slice.

1005. The radio access network device sends the cell reselection parameter of the at least one network slice.

Specifically, the radio access network device broadcasts, in a fourth cell, a cell reselection parameter of a network slice supported by the fourth cell. For example, if the fourth cell supports a network slice A and a network slice B, the radio access network device broadcasts, in the fourth cell, a cell reselection parameter of the network slice A and a cell reselection parameter of the network slice B. When the terminal device accesses the fourth cell, the radio access network device sends the cell reselection parameter of the network slice supported by the fourth cell to the terminal device by using an RRC message. The fourth cell is a cell served by the radio access network device, and supports a part or all of the at least one network slice. The cell reselection parameter of the network slice indicates the terminal device to determine, when the to-be-requested network slice is the network slice, whether to reselect the fourth cell served by the radio access network device for camping on.

The first reselection parameter includes a first power reselection threshold ($\text{Thresh}_{X,\text{HighP},\text{S-NSSAI}}$) and a first quality reselection threshold ($\text{Thresh}_{X,\text{HighQ},\text{S-NSSAI}}$). X in the first power reselection threshold and the first quality reselection threshold represents a frequency, and neighboring cells with different frequencies correspond to different first reselection parameters. HighP represents a power reselection threshold of a high-priority cell. HighQ indicates a quality reselection threshold of the high-priority cell. S-NSSAI indicates that the reselection threshold is a reselection threshold dedicated to the network slice. The first power reselection threshold indicates the terminal device to determine, based on a cell selection received power value of the high-priority fourth cell, whether to reselect the fourth cell for camping on and access the network slice through the fourth cell. The first quality reselection threshold indicates the terminal device to determine, based on a cell selection quality value of the high-priority fourth cell, whether to reselect the high-priority fourth cell for camping on and access the network slice through the fourth cell.

A second reselection parameter includes a reselection hysteresis value ($\text{Qhyst}_{\text{S-NSSAI}}$) of the network slice and a reselection offset value ($\text{Qoffset}_{\text{S-NSSAI}}$) of the network slice. The reselection hysteresis value of the network slice and the reselection offset value of the network slice are applied to an R criterion for same-priority cell reselection, to obtain an R criterion of the network slice.

In the R criterion of the network slice, a ranking value ($\text{Rn}_{\text{S-NSSAI}}$) of the serving cell on which the terminal device currently camps satisfies the following formula:

$\text{Rn}_{\text{S-NSSAI}} = \text{Qmeas},n - \text{Qoffset}_{\text{S-NSSAI}} - \text{Qoffsettemp}$, where Qmeas,n is a received power value of the serving cell, $\text{Qoffset}_{\text{S-NSSAI}}$ is the reselection hysteresis value of the network slice, and Qoffsettemp is an offset that is temporarily applied to the fourth cell and that is specified in an existing communication protocol.

In the R criterion of the network slice, a ranking value ($\text{RN}_{\text{S-NSSAI}}$) that is of the fourth cell and that is measured by the terminal device satisfies the following formula:

$\text{Rn}_{\text{S-NSSAI}} = \text{Qmeas}, n - \text{Qoffset}_{\text{S-NSSAI}} - \text{Qoffsettemp}$, where Qmeas,n is a received power value of the fourth cell, $\text{Qoffset}_{\text{S-NSSAI}}$ is the reselection offset value of the network slice, and Qoffsettemp is an offset that is temporarily applied to the fourth cell and that is specified in an existing communication protocol.

The R criterion of the network slice is as follows: If an R value of the same-priority fourth cell is greater than an R value of the serving cell within a cell reselection time interval (TreselectionRAT), and camping duration of the terminal device in the serving cell exceeds first duration, the terminal device may reselect the same-priority fourth cell for camping on. Specific duration of the cell reselection time interval and the first duration may be adjusted based on an actual situation, for example, 1 second, 3 seconds, or 0.5 second. This is not limited herein.

A third reselection parameter includes a second power reselection threshold ($\text{Thresh}_{\text{Serving},\text{LowP},\text{S-NSSAI}}$), a third power reselection threshold ($\text{Thresh}_{X,\text{LowP},\text{S-NSSAI}}$), a second quality reselection threshold ($\text{Thresh}_{\text{Serving},\text{LowQ},\text{S-NSSAI}}$), and a third quality reselection threshold ($\text{Thresh}_{\text{Serving},\text{LowQ},\text{S-NSSAI}}$). Serving represents the serving cell, LowP represents a power reselection threshold of a low-priority cell, LowQ represents a quality reselection threshold of the low-priority cell, X represents a frequency of a neighboring cell, and neighboring cells with different frequencies correspond to different third reselection parameters. The third reselection parameter indicates the terminal device to reselect, when the cell selection received power value of the serving cell on which the terminal device currently camps is less than the second power reselection threshold, and a cell selection received power value of the low-priority fourth cell is not less than the third power reselection threshold, the low-priority fourth cell for camping on. The third reselection parameter of the network slice further indicates the terminal device to reselect, when the cell selection quality value of the serving cell is less than the second quality reselection threshold, and a cell selection quality value of the low-priority fourth cell is not less than the third quality reselection threshold, the low-priority fourth cell for camping on.

In an optional implementation, the radio access network device further sends reselection indication information to the terminal device, where the reselection indication information indicates the terminal device to perform cell reselection based on a cell selection quality value of a cell. For example, the reselection indication information is a quality threshold indication parameter threshServingLowQ included by the radio access network device in a system information block 2 (system information block 2, SIB2).

1006. The terminal device determines, based on the cell reselection parameter of the network slice, whether to reselect the fourth cell served by the radio access network device for camping on.

When the terminal device needs to access one or more of the at least one network slice, the terminal device determines, based on the cell reselection parameter of the at least one network slice, whether to start measurement on the fourth cell served by the radio access network device. It may be understood that the cell reselection measurement startup parameter of the network slice further indicates at least one fourth cell that is served by the radio access network device and that supports the network slice.

When the fourth cell is a high-priority cell, after the terminal device starts measurement on the high-priority fourth cell, the terminal device determines, based on the first reselection parameter of the network slice supported by the fourth cell, whether to reselect the fourth cell for camping on. Specifically, when the cell selection received power value of the fourth cell is greater than the first power reselection threshold, or the cell selection quality value of the fourth cell is greater than the first quality reselection threshold, the terminal device determines to reselect the fourth cell for camping on. In some embodiments, within a cell reselection time interval, if the cell selection received power value of the fourth cell is greater than the first power reselection threshold, or the cell selection quality value of the fourth cell is greater than the first quality reselection threshold, the terminal device reselects the fourth cell for camping on. In still other some embodiments, before performing cell reselection, the terminal device receives the reselection indication information from the radio access network device, where the reselection indication information indicates the terminal device to perform cell reselection based on a cell selection quality value of a cell. For example, the reselection indication information is the quality threshold indication parameter threshServingLowQ included by the radio access network device in the system information block 2 (system information block 2, SIB2). After the terminal device receives the reselection indication information, if the cell selection quality value of the fourth cell is greater than the first quality reselection threshold, the terminal device determines to reselect the fourth cell for camping on.

When the fourth cell is a same-priority cell, after the terminal device starts measurement on the same-priority fourth cell, the terminal device determines, based on the second reselection parameter of the network slice supported by the fourth cell, whether to reselect the fourth cell for camping on. Specifically, the terminal device calculates a value of $Rn_{S\text{-}NSSAI}$ of the serving cell based on the second reselection parameter of the network slice and a formula $RS_{S\text{-}NSSAI} = Qmeas,s + Qhyst_{S\text{-}NSSAI} - Qoffsettemp$, and calculates a value of $Rn_{S\text{-}NSSAI}$ of the fourth cell based on a formula $Rn_{S\text{-}NSSAI} = Qmeas,n - Qoffset_{S\text{-}NSSAI} - Qoffsettemp$. When the value of $Rn_{S\text{-}NSSAI}$ of the fourth cell is greater than the value of $RS_{S\text{-}NSSAI}$ of the serving cell, the terminal device determines to reselect the fourth cell for camping on. In some embodiments, if the value of $Rn_{S\text{-}NSSAI}$ of the fourth cell is greater than the value of $RS_{S\text{-}NSSAI}$ of the serving cell within the cell reselection time interval, the terminal device determines to reselect the fourth cell for camping on. Optionally, if there are at least two fourth cells whose values of $Fn_{S\text{-}NSSAI}$ are greater than the value of $RS_{S\text{-}NSSAI}$, the terminal device reselects a fourth cell whose value is the largest for camping on.

When the fourth cell is a low-priority cell, after the terminal device starts measurement on the low-priority fourth cell, the terminal device determines, based on the third reselection parameter of the network slice supported by the fourth cell, whether to reselect the fourth cell for camping on. Specifically, in some embodiments, when the cell selection received power value of the serving cell is less than the second power reselection threshold, and the cell reselection quality value of the low-priority fourth cell is greater than the third power reselection threshold, the terminal device determines to reselect the low-priority fourth cell for camping on. The serving cell is a cell on which the terminal device currently camps. In some implementations, when the cell selection received quality value of the serving cell is less than the second quality reselection threshold, and the cell selection quality value of the low-priority fourth cell is greater than the third quality reselection threshold, the terminal device determines to reselect the low-priority fourth cell for camping on. In still other some embodiments, before performing cell reselection, the terminal device receives the reselection indication information from the radio access network device, where the reselection indication information indicates the terminal device to perform cell reselection based on a cell selection quality value of a cell. For example, the reselection indication information is the quality threshold indication parameter threshServingLowQ included by the radio access network device in the system information block 2 (system information block 2, SIB2). After the terminal device receives the reselection indication information, the terminal device determines, based on the cell selection quality value of the serving cell and the cell selection quality value of the fourth cell, whether to reselect the fourth cell for camping on. Specifically, after the terminal device receives the reselection indication information, when the cell selection quality value of the serving cell is less than the second quality reselection threshold, and the cell selection quality value of the low-priority fourth cell is greater than the third quality reselection threshold, the terminal device determines to reselect the low-priority fourth cell for camping on.

It should be noted that an execution sequence of step 1001, step 1003, and step 1005 is not limited in this embodiment, and the radio access network device may alternatively simultaneously perform step 1001, step 1003, and step 1005. The second cell may be the third cell or the fourth cell, and the third cell may also be the fourth cell. The radio access network device may broadcast at least one of a cell selection parameter, a cell reselection measurement startup parameter, or a cell reselection parameter of a network slice, to control the terminal device to access the network slice.

In this embodiment, the cell reselection measurement startup parameter of the network slice and the cell reselection parameter of the network slice are used to further control the terminal device to access the cell that supports the network slice, to implement load control on the network slice on an access network side.

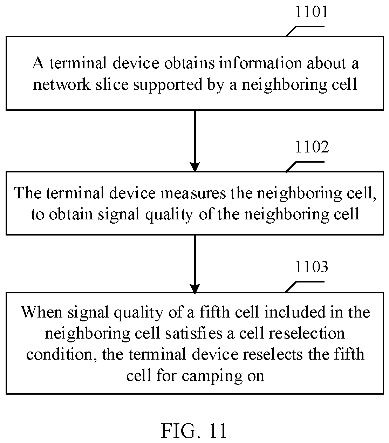

FIG. 11 is a schematic diagram of a cell reselection method according to an embodiment of this application. The method is applicable to the following scenario: A network resource of a first network slice is not overloaded, and a service currently performed by a terminal device belongs to the first network slice. A serving cell on which the terminal device camps does not support the first network slice, but the serving cell supports a second network slice. A network resource of the second network slice can implement a service of the first network slice. The terminal device implements the service of the first network slice by using the second network slice. The method may include the following steps.

1101. The terminal device obtains information about a network slice supported by a neighboring cell.

The information about the network slice supported by the neighboring cell includes an identifier of the network slice supported by the neighboring cell, and the information about the network slice supported by the neighboring cell indicates the network slice supported by the neighboring cell. For example, information about a network slice supported by a neighboring cell 1 indicates that the neighboring cell supports a network slice A, a network slice B, and a network slice C.

The terminal device may obtain, by using a broadcast message of the serving cell, the information about the network slice supported by the neighboring cell; or may obtain, by using a broadcast message of the neighboring cell, the information about the network slice supported by the neighboring cell. Alternatively, the terminal device may obtain, in another manner, for example, by using an RRC message of the serving cell, the information about the network slice supported by the neighboring cell. This is not limited in this embodiment of this application.

In some embodiments, when the serving cell does not support the first network slice, the terminal device obtains the information about the network slice supported by the neighboring cell. The serving cell is a cell on which the terminal device currently camps. In some other embodiments, when signal quality of the serving cell is not greater than a ninth threshold, the terminal device obtains the information about the network slice supported by the neighboring cell. When the signal quality of the serving cell is poor or the serving cell does not support the first network slice, the terminal device may reselect, based on the information about the network slice supported by the neighboring cell, a cell that satisfies at least one of the following conditions for camping on: the first network slice is supported and signal quality is good, so as to ensure that the terminal device obtains a service in the first network slice and communication quality of the terminal device.

In this embodiment of this application, signal quality of a cell may be reflected by using an RSRP or RSRQ of the cell. Actually, the terminal device may alternatively reflect the signal quality of the serving cell by using another attribute of the cell, for example, a cell selection quality value of the cell. This is not limited in this embodiment of this application.

1102. The terminal device measures the neighboring cell, to obtain signal quality of the neighboring cell.

The neighboring cell measured by the terminal device includes at least one of a fifth cell, a sixth cell, or a seventh cell. The fifth cell is a cell that supports the first network slice. The sixth cell is a cell that supports the second network slice. The seventh cell is a cell that supports neither the first network slice nor the second network slice.

In some embodiments, when determining, based on the information about the network slice supported by the neighboring cell, that the neighboring cell includes the fifth cell, the terminal device starts measurement on the neighboring cell. Optionally, when the neighboring cell includes the fifth cell, the terminal device starts measurement on a second cell in the neighboring cell. In some other embodiments, when performing periodic measurement in the serving cell, the terminal device measures the neighboring cell. In still other some embodiments, the terminal device measures the neighboring cell when the signal quality of the serving cell is less than the ninth threshold. In this embodiment of this application, the signal quality may be reflected by a reference signal received power or reference signal received quality, or may be reflected by other signal quality, for example, a received signal strength indicator (received signal strength indicator, RSSI). The signal quality is not limited in this embodiment of this application.

1103. When signal quality of the fifth cell included in the neighboring cell satisfies a cell reselection condition, the terminal device reselects the fifth cell for camping on.

When the neighboring cell includes the fifth cell supporting the first network slice, and the signal quality of the fifth cell satisfies the cell reselection condition, the terminal device reselects the fifth cell for camping on, and accesses the first network slice through the fifth cell. After accessing the first network slice, the terminal device implements the service of the first network slice by using the first network slice, so that performance experience of the terminal device is improved. When the signal quality of the fifth cell satisfies the cell reselection condition, the terminal device reselects the fifth cell for camping on, to ensure communication quality when the terminal device camps on the fifth cell.

The cell reselection condition may be a cell reselection condition in an existing communication protocol. For example, when the neighboring cell is a high-priority neighboring cell, the cell reselection condition is that the signal quality of the neighboring cell is greater than a quality threshold within a cell reselection time interval. In some embodiments, the cell reselection condition may alternatively be that the signal quality of the neighboring cell satisfies the cell reselection parameter of the network slice in the foregoing embodiment. For example, when the signal quality of the fifth cell satisfies a cell reselection parameter of the first network slice, the terminal device reselects the fifth cell for camping on, to ensure that the first network slice is not overloaded and a slice request of the terminal device can be responded in time.

In an optional implementation, when the neighboring cell does not include the fifth cell, or the signal quality of the fifth cell in the neighboring cell does not satisfy the cell reselection condition, if the neighboring cell includes the sixth cell, and signal quality of the sixth cell satisfies the cell reselection condition, the terminal device reselects the sixth cell for camping on.

In this embodiment, when the serving cell does not support the first network slice, the terminal device reselects the fifth cell that supports the first network slice for camping on, so that the terminal device implements the service of the first network slice by using the first network slice, so that the performance experience of the terminal device is improved.

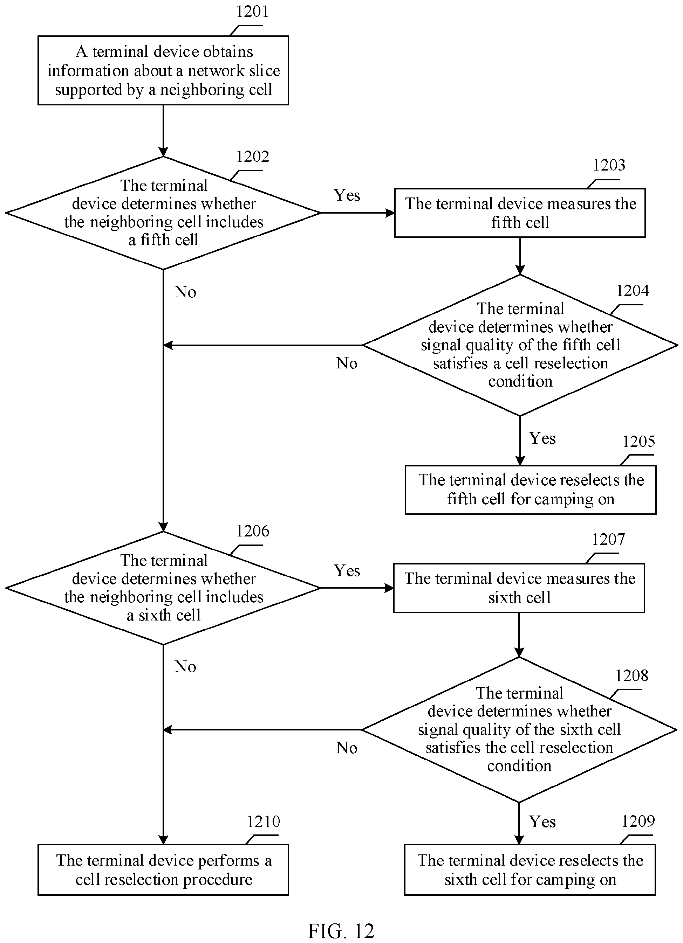

FIG. 12 is a schematic diagram of another cell reselection method according to an embodiment of this application. The method is applicable to the following scenario: A network resource of a first network slice is not overloaded, and a service currently performed by a terminal device belongs to the first network slice. A serving cell on which the terminal device camps does not support the first network slice, but the serving cell supports a second network slice. A network resource of the second network slice can implement a service of the first network slice. The terminal device implements the service of the first network slice by using the second network slice. The method is a further improvement and refinement of the method shown in FIG. 11. The method may include the following steps.

1201. The terminal device obtains information about a network slice supported by a neighboring cell.

Step 1201 is similar to step 1301 in the foregoing embodiment. Details are not described herein again.

1202. The terminal device determines whether the neighboring cell includes a fifth cell.

1203. When the neighboring cell includes the fifth cell, the terminal device measures the fifth cell.

When the neighboring cell includes the fifth cell, the terminal device measures only the fifth cell, to reduce power consumption of the terminal device for measuring the neighboring cell.

1204. The terminal device determines whether signal quality of the fifth cell satisfies a cell reselection condition.

1205. If the signal quality of the fifth cell satisfies the cell reselection condition, the terminal device reselects the fifth cell for camping on.

1206. When the neighboring cell does not include the fifth cell, or the signal quality of the fifth cell does not satisfy the cell reselection condition, the terminal device determines whether the neighboring cell includes a sixth cell.

1207. When the neighboring cell includes the sixth cell, the terminal device measures the sixth cell.

Specifically, when the neighboring cell does not include the fifth cell, or the signal quality of the fifth cell in the neighboring cell does not satisfy the cell reselection condition, if the neighboring cell includes the sixth cell, the terminal device measures the sixth cell, to obtain signal quality of the sixth cell. The terminal device selectively measures the neighboring cell, to reduce a power used by the terminal device to measure the neighboring cell.

When the neighboring cell does not include the fifth cell, a trigger condition for measuring the neighboring cell or the sixth cell by the terminal device includes: The serving cell indicates the terminal device to perform periodic measurement, or signal quality of the serving cell is less than a ninth threshold. For example, when the signal quality is a reference signal received power, and the ninth threshold corresponding to the reference signal received power is -95 dBm, the terminal device starts measurement on the sixth cell when the reference signal received power of the serving cell is less than -95 dBm.

1208. The terminal device determines whether the signal quality of the sixth cell satisfies the cell reselection condition.

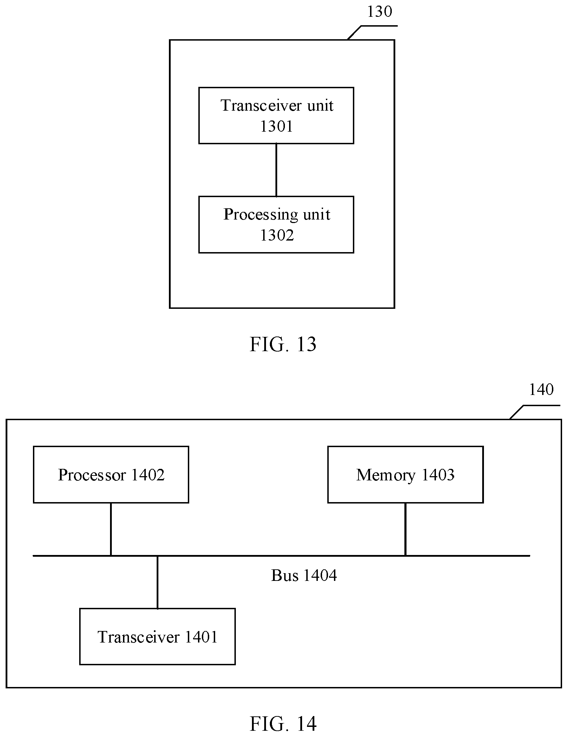

In this embodiment, the cell reselection condition is the same as the descriptions about the cell reselection condition in the embodiment shown in FIG. 13. Details are not described herein again.

1209. When the signal quality of the sixth cell satisfies the cell reselection condition, the terminal device reselects the sixth cell for camping on.

1210. The terminal device performs a cell reselection procedure when the neighboring cell does not include the sixth cell or the signal quality of the sixth cell does not satisfy the cell reselection condition.

Specifically, when the neighboring cell does not include the fifth cell or the signal quality of the fifth cell does not satisfy the cell reselection condition, the terminal device performs the cell reselection procedure if the neighboring cell does not include the sixth cell or the signal quality of the sixth cell in the neighboring cell does not satisfy the cell reselection condition.

The cell reselection procedure is a cell reselection procedure in an existing communication protocol. The terminal device performs the cell reselection procedure, so that when the signal quality of the serving cell is poor, the terminal device can reselect a seventh cell having good signal quality for camping on. The seventh cell supports neither the first network slice nor the second network slice, but communication quality of the terminal device can be ensured.

According to the cell reselection method in this embodiment, when the service currently performed by the terminal device belongs to the first network slice, the terminal device can preferentially camp on the fifth cell that supports the first network slice or the sixth cell that supports the second network slice, so that the service, in the first network slice, of the terminal device is ensured, and it is ensured that the terminal device reselects a cell having good signal quality for camping on, to ensure the communication quality of the terminal device.

The foregoing describes in detail the method in embodiments of this application, and the following provides an apparatus in embodiments of this application.

FIG. 13 is a schematic diagram of a logical structure of a communication apparatus according to an embodiment of this application. The communication apparatus 130 may include a transceiver unit 1301 and a processing unit 1302. The communication apparatus 130 may be the radio access network device in the foregoing embodiment, or may be the terminal device in the foregoing embodiment, or may be the core network device in the foregoing embodiment.

In an optional implementation, if the communication apparatus 130 is the radio access network device, the transceiver unit 1301 is configured to send and receive information, and the processing unit 1302 is configured to perform, by using the transceiver unit 1301, step 301, step 303, step 305, step 306, and step 307 in the embodiment shown in FIG. 3, and is configured to perform step 302 in the embodiment shown in FIG. 3. The processing unit 1302 is further configured to perform, by using the transceiver unit 1301, step 401, step 402, step 403, step 404, step 406, step 407, and step 408 in the embodiment shown in FIG. 4. The processing unit 1302 is further configured to perform, by using the transceiver unit 1301, step 504, step 505, and step 506 in the embodiment shown in FIG. 5. The processing unit 1302 is further configured to perform, by using the transceiver unit 1301, step 601, step 602, step 604, step 605, step 606, and step 608 in the embodiment shown in FIG. 6, and is configured to perform step 603 in the embodiment shown in FIG. 6. The processing unit 1302 is further configured to perform, by using the transceiver unit 1301, step 701, step 703, step 707, and step 708 in the embodiment shown in FIG. 7, and is configured to perform step 702 in the embodiment shown in FIG. 7. The processing unit 1302 is further configured to perform, by using the transceiver unit 1301, step 801, step 803, step 804, step 805, step 806, step 807, step 808, and step 810 in the embodiment shown in FIG. 8, and is configured to perform step 802 in the embodiment shown in FIG. 8. The processing unit 1302 is further configured to perform, by using the transceiver unit 1301, step 901 in the embodiment shown in FIG. 9. The processing unit 1302 is further configured to perform, by using the transceiver unit 1301, step 1001, step 1003, and step 1005 in the embodiment shown in FIG. 10.

In an optional implementation, if the communication apparatus 130 is the core network device, the transceiver unit 1301 is configured to send and receive information, and the processing unit 1302 is configured to perform step 304 in the embodiment shown in FIG. 3, and is configured to perform, by using the transceiver unit 1301, step 301, step 303, and step 305 in the embodiment shown in FIG. 3. The processing unit 1302 is further configured to perform, by using the transceiver unit 1301, step 401, step 403, and step 405 in the embodiment shown in FIG. 4, and is configured to perform step 404 in the embodiment shown in FIG. 4. The processing unit 1302 is further configured to perform, by using the transceiver unit 1301, step 501, step 502, and step 504 in the embodiment shown in FIG. 5, and is configured to perform step 503 in the embodiment shown in FIG. 5. The processing unit 1302 is further configured to perform, by using the transceiver unit 1301, step 601, step 606, and step 608 in the embodiment shown in FIG. 6, and is configured to perform step 607 in the embodiment shown in FIG. 6. The processing unit 1302 is further configured to perform, by using the transceiver unit 1301, step 701, step 705, and step 707 in the embodiment shown in FIG. 7. The processing unit 1302 is further configured to perform, by using the transceiver unit 1301, step 801, step 808, and step 810 in the embodiment shown in FIG. 8, and is configured to perform step 809 in the embodiment shown in FIG. 8.

In an optional implementation, if the communication apparatus 130 is the terminal device, the transceiver unit 1301 is configured to send and receive information, and the processing unit 1302 is configured to perform, by using the transceiver unit 1301, step 306 and step 307 in the embodiment shown in FIG. 3. The processing unit 1302 is further configured to perform, by using the transceiver unit 1301, step 402, step 403, step 407, and step 408 in the embodiment shown in FIG. 4. The processing unit 1302 is further configured to perform, by using the transceiver unit 1301, step 501, step 502, step 505, and step 506 in the embodiment shown in FIG. 5. The processing unit 1302 is further configured to perform, by using the transceiver unit 1301, step 602, step 604, and step 605 in the embodiment shown in FIG. 6. The processing unit 1302 is further configured to perform, by using the transceiver unit 1301, step 708 and step 709 in the embodiment shown in FIG. 7. The processing unit 1302 is further configured to perform, by using the transceiver unit 1301, step 805 and step 806 in the embodiment shown in FIG. 8. The processing unit 1302 is further configured to perform, by using the transceiver unit 1301, step 901 in the embodiment shown in FIG. 9, and is configured to perform step 909 in the embodiment shown in FIG. 9. The processing unit 1302 is further configured to perform, by using the transceiver unit 1301, step 1001, step 1003, and step 1005 in the embodiment shown in FIG. 10, and is configured to perform step 1002, step 1004, and step 1006 in the embodiment shown in FIG. 10. The processing unit 1302 is further configured to perform, by using the transceiver unit 1301, step 1101 in the embodiment shown in FIG. 11, and is configured to perform step 1102 and step 1103 in the embodiment shown in FIG. 11. The processing unit 1302 is further configured to perform, by using the transceiver unit 1301, step 1201 in the embodiment shown in FIG. 12, and is configured to perform steps 1202 to 1210 in the embodiment shown in FIG. 12.

FIG. 14 is a simplified schematic diagram of an entity structure of a communication apparatus according to an embodiment of this application. The communication apparatus 140 includes a transceiver 1401, a processor 1402, and a memory 1403. The transceiver 1401, the processor 1402, and the memory 1403 may be connected to each other by using a bus 1404, or may be connected to each other in another manner. The communication apparatus 140 may be a radio access network device, a terminal device, or a core network device.

A related function implemented by the transceiver unit 1301 shown in FIG. 13 may be implemented by using the transceiver 1401. A related function implemented by the processing unit 1302 shown in FIG. 13 may be implemented by using the processor 1402.

The memory 1403 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1403 is configured to store related instructions and related data.

The transceiver 1401 is configured to: send data or signaling, and receive data or signaling.

The processor 1402 may include one or more processors, for example, may include one or more central processing units (central processing units, CPUs). When the processor 1402 is one CPU, the CPU may be a single-core CPU or a multi-core CPU.

In an optional implementation, if the communication apparatus 140 is the radio access network device, the processor 1402 is configured to perform, by using the transceiver 1401, step 301, step 303, step 305, step 306, and step 307 in the embodiment shown in FIG. 3, and is configured to perform step 302 in the embodiment shown in FIG. 3. The processor 1402 is further configured to perform, by using the transceiver 1401, step 401, step 402, step 403, step 404, step 406, step 407, and step 408 in the embodiment shown in FIG. 4. The processor 1402 is further configured to perform, by using the transceiver 1401, step 504, step 505, and step 506 in the embodiment shown in FIG. 5. The processor 1402 is further configured to perform, by using the transceiver 1401, step 601, step 602, step 604, step 605, step 606, and step 608 in the embodiment shown in FIG. 6, and is configured to perform step 603 in the embodiment shown in FIG. 6. The processor 1402 is further configured to perform, by using the transceiver 1401, step 701, step 703, step 707, and step 708 in the embodiment shown in FIG. 7, and is configured to perform step 702 in the embodiment shown in FIG. 7. The processor 1402 is further configured to perform, by using the transceiver 1401, step 801, step 803, step 804, step 805, step 806, step 807, step 808, and step 810 in the embodiment shown in FIG. 8, and is configured to perform step 802 in the embodiment shown in FIG. 8. The processor 1402 is further configured to perform, by using the transceiver 1401, step 901 in the embodiment shown in FIG. 9. The processor 1402 is further configured to perform, by using the transceiver 1401, step 1001, step 1003, and step 1005 in the embodiment shown in FIG. 10.

In an optional implementation, if the communication apparatus 140 is the core network device, the processor 1402 is configured to perform step 304 in the embodiment shown in FIG. 3, and is configured to perform, by using the transceiver 1401, step 301, step 303, and step 305 in the embodiment shown in FIG. 3. The processor 1402 is further configured to perform, by using the transceiver 1401, step 401, step 403, and step 405 in the embodiment shown in FIG. 4, and is configured to perform step 404 in the embodiment shown in FIG. 4. The processor 1402 is further configured to perform, by using the transceiver 1401, step 501, step 502, and step 504 in the embodiment shown in FIG. 5, and is configured to perform step 503 in the embodiment shown in FIG. 5. The processor 1402 is further configured to perform, by using the transceiver 1401, step 601, step 606, and step 608 in the embodiment shown in FIG. 6, and is configured to perform step 607 in the embodiment shown in FIG. 6. The processor 1402 is further configured to perform, by using the transceiver 1401, step 701, step 705, and step 707 in the embodiment shown in FIG. 7. The processor 1402 is further configured to perform, by using the transceiver 1401, step 801, step 808, and step 810 in the embodiment shown in FIG. 8, and is configured to perform step 809 in the embodiment shown in FIG. 8.

In an optional implementation, if the communication apparatus 140 is the terminal device, the processor 1402 is configured to perform, by using the transceiver 1401, step 306 and step 307 in the embodiment shown in FIG. 3. The processor 1402 is further configured to perform, by using the transceiver 1401, step 402, step 403, step 407, and step 408 in the embodiment shown in FIG. 4. The processor 1402 is further configured to perform, by using the transceiver 1401, step 501, step 502, step 505, and step 506 in the embodiment shown in FIG. 5. The processor 1402 is further configured to perform, by using the transceiver 1401, step 602, step 604, and step 605 in the embodiment shown in FIG. 6. The processor 1402 is further configured to perform, by using the transceiver 1401, step 708 and step 709 in the embodiment shown in FIG. 7. The processor 1402 is further configured to perform, by using the transceiver 1401, step 805 and step 806 in the embodiment shown in FIG. 8. The processor 1402 is further configured to perform, by using the transceiver 1401, step 901 in the embodiment shown in FIG. 9, and is configured to perform step 909 in the embodiment shown in FIG. 9. The processor 1402 is further configured to perform, by using the transceiver 1401, step 1001, step 1003, and step 1005 in the embodiment shown in FIG. 10, and is configured to perform step 1002, step 1004, and step 1006 in the embodiment shown in FIG. 10. The processor 1402 is further configured to perform, by using the transceiver 1401, step 1101 in the embodiment shown in FIG. 11, and is configured to perform step 1102 and step 1103 in the embodiment shown in FIG. 11. The processor 1402 is further configured to perform, by using the transceiver 1401, step 1201 in the embodiment shown in FIG. 12, and is configured to perform steps 1202 to 1210 in the embodiment shown in FIG. 12.

The memory 1403 is configured to store program code and data of the communication apparatus 140.

It may be understood that FIG. 14 shows only a simplified design of a first communication apparatus. During actual application, the first communication apparatus may further include other necessary components, including but not limited to any quantity of transceivers, processors, controllers, memories, or communication units. All apparatuses that can implement this application fall within the protection scope of this application.

A person of ordinary skill in the art may understand that all or some of the procedures of the methods in the embodiments may be implemented by a computer program instructing relevant hardware. The program may be stored in a computer-readable storage medium. When the program is run, the procedures of the foregoing method embodiments may be performed. The foregoing storage medium includes any medium that can store program code, such as a ROM, a random access memory RAM, a magnetic disk, or an optical disc. Therefore, another embodiment of this application provides a computer-readable storage medium. The computer-readable storage medium stores instructions. When the instructions are run on a computer, the computer is enabled to perform the methods in the foregoing aspects.

Another embodiment of this application further provides a computer program product including instructions. When the computer program product is run on a computer, the computer is enabled to perform the methods in the foregoing aspects.

A person of ordinary skill in the art may be aware that, in combination with the examples described in embodiments disclosed in this application, units and algorithm steps may be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, function units in embodiments of this application may be integrated into one processing module, or each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium, or may be transmitted through the computer-readable storage medium. The computer instruction may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

**Claims**

1. A network slice load control method, comprising:

   receiving, by a radio access network device, first remapping information from a core network device, wherein the first remapping information comprises an identifier of a first network slice and an identifier of at least one second network slice, and the first remapping information indicates that protocol data unit PDU sessions, in the first network slice, of a plurality of terminal devices connected to the radio access network device are to be remapped to one of the at least one second network slice; and
   sending, by the radio access network device, first indication information to the core network device, wherein the first indication information comprises the identifier of the first network slice and the identifier of the second network slice, and the first indication information indicates the core network device to remap the PDU sessions, in the first network slice, of the plurality of terminal devices connected to the radio access network device to the second network slice.

2. The method according to claim 1, wherein the method further comprises:
   sending, by the radio access network device, second remapping information to one terminal device connected to the radio access network device, wherein the second remapping information comprises the identifier of the first network slice and an identifier of at least one third network slice, and the at least one third network slice is a part or all of the at least one second network slice.

3. The method according to claim 2, wherein when the second remapping information comprises only an identifier of one third network slice, the second remapping information indicates the terminal device to access the third network slice; and
   the sending, by the radio access network device, first indication information to the core network device comprises:
   receiving, by the radio access network device, second indication information from the terminal device, and sending the first indication information to the core network device, wherein the second indication information indicates that the terminal device is to access the third network slice, the identifier that is of the second network slice and that is comprised in the first indication information is the identifier of the third network slice, and the first indication information further comprises an identifier of the terminal device.

4. The method according to claim 2, wherein when the second remapping information comprises identifiers of at least two third network slices, the second remapping information indicates the terminal device to select one network slice from the at least two third network slices for accessing; and
   the sending, by the radio access network device, first indication information to the core network device comprises:
   receiving, by the radio access network device, second indication information from the terminal device, and sending the first indication information to the core network device, wherein the second indication information indicates that the terminal device is to access the network slice, the identifier that is of the second network slice and that is comprised in the first indication information is an identifier of the network slice, and the first indication information further comprises an identifier of the terminal device.

5. The method according to claim 1, wherein before the sending, by the radio access network device, first indication information to the core network device, the method further comprises:
   determining, by the radio access network device, that the PDU sessions, in the first network slice, of the plurality of terminal devices connected to the radio access network device are to be remapped to the second network slice.

6. The method according to claim 1, wherein after the receiving, by a radio access network device, first remapping information from a core network device, and before the sending, by the radio access network device, first indication information to the core network device, the method further comprises:
   receiving, by the radio access network device, a radio resource control RRC resume request from a terminal device, wherein the RRC resume request requests to resume a PDU session, in the first network slice, of the terminal device.

7. The method according to claim 6, wherein before the sending, by the radio access network device, first indication information to the core network device, the method further comprises:

sending, by the radio access network device, an RRC resume message to the terminal device, wherein the RRC resume message indicates the terminal device to access the second network slice.

8. The method according to claim 7, wherein after the receiving, by the radio access network device, an RRC resume request from a terminal device, and before the sending, by the radio access network device, an RRC resume message to the terminal device, the method further comprises:
determining, by the radio access network device, that the PDU session, in the first network slice, of the terminal device is to be remapped to the second network slice.

9. The method according to any one of claims 1 to 8, wherein after the receiving, by a radio access network device, first remapping information from a core network device, the method further comprises:

broadcasting, by the radio access network device, the first remapping information, wherein
the first remapping information indicates a terminal device that receives the first remapping information to update, when a to-be-requested network slice is the first network slice, the to-be-requested network slice to one of the at least one second network slice.

10. A network slice load control method, comprising:

sending, by a core network device, first remapping information to a radio access network device, wherein the first remapping information comprises an identifier of a first network slice and an identifier of at least one second network slice, and the first remapping information indicates that PDU sessions, in the first network slice, of a plurality of terminal devices connected to the radio access network device are to be remapped to one of the at least one second network slice; and
receiving, by the core network device, first indication information sent by the radio access network device, wherein the first indication information comprises the identifier of the first network slice and the identifier of the second network slice, and the first indication information indicates the core network device to remap the PDU sessions, in the first network slice, of the plurality of terminal devices connected to the radio access network device to the second network slice.

11. The method according to claim 10, wherein the first indication information further comprises an identifier of one terminal device connected to the radio access network device, and the second network slice is a network slice that the terminal device determines to access.

12. The method according to claim 10, wherein the method further comprises:

sending, by the core network device, cell information to the radio access network device when the radio access network device does not support the second network slice, wherein
the cell information comprises information about at least one first cell, the first cell supports the second network slice, and the cell information indicates the radio access network device to control the terminal devices connected to the radio access network device to access the first cell, to enable the terminal device connected to the radio access network device to access the second network slice through the first cell.

13. A network slice load control method, comprising:

when accessing a first network slice, receiving, by a terminal device, second remapping information sent by a radio access network device, wherein the second remapping information comprises an identifier of the first network slice and an identifier of at least one third network slice, and the second remapping information indicates the terminal device to access one of the at least one third network slice, to enable a PDU session, in the first network slice, of the terminal device to be remapped to the third network slice of the at least one third network slice; and
sending, by the terminal device, second indication information to the radio access network device, wherein the second indication information indicates that the terminal device is to access the third network slice of the at least one third network slice.

14. The method according to claim 13, wherein the method further comprises:
receiving, by the terminal device in an idle state or an inactive state, first remapping information broadcast by the radio access network device, wherein the first remapping information comprises the identifier of the first network slice and an identifier of at least one second network slice, and the first remapping information indicates the terminal device to update, when a to-be-requested network slice is the first network slice, the to-be-requested network slice to one of the at least one second network slice.

15. A communication apparatus, comprising a transceiver unit and a processing unit, wherein

the transceiver unit is configured to send and receive a signal;
the processing unit is configured to perform the following operation by using the transceiver unit, wherein first remapping information comprises an identifier of a first network slice and an identifier of at least one second network slice, and the first remapping information indicates that PDU sessions, in the first network slice, of a plurality of terminal devices connected to a radio access network device are to be remapped to one of the at least one second network slice:
sending first indication information to a core network device, wherein the first indication information comprises an identifier of the second network slice, and the first indication information indicates the core network device to remap the PDU sessions, in the first network slice, of the plurality of terminal devices connected to the radio access network device to the second network slice.

16. The communication apparatus according to claim 15, wherein
the processing unit is further configured to send, by using the transceiver unit, second remapping information to one terminal device connected to the radio access network device, wherein the second remapping information comprises the identifier of the first network slice and an identifier of at least one third network slice, and the at least one third network slice is a part or all of the at least one second network slice.

17. The communication apparatus according to claim 16, wherein when the second remapping information comprises only an identifier of one third network slice, the second remapping information indicates the terminal device to access the third network slice; and
the processing unit is configured to send the first indication information to the core network device by using the transceiver unit, and is specifically configured to perform the following operations by using the transceiver unit: receiving second indication information from the terminal device, and sending the first indication information to the core network device, wherein the second indication information indicates that the terminal device is to access the third network slice, the identifier that is of the second network slice and that is comprised in the first indication information is the identifier of the third network slice, and the first indication information further comprises an identifier of the terminal device.

18. The communication apparatus according to claim 16, wherein when the second remapping information comprises identifiers of at least two third network slices, the second remapping information indicates the terminal device to select one network slice from the at least two third network slices for accessing; and
the processing unit is configured to send the first indication information to the core network device by using the transceiver unit, and is specifically configured to perform the following operations by using the transceiver unit: receiving second indication information from the terminal device, and sending the first indication information to the core network device, wherein the second indication information indicates that the terminal device is to access the network slice, the identifier that is of the second network slice and that is comprised in the first indication information is an identifier of the network slice, and the first indication information further comprises an identifier of the terminal device.

19. The communication apparatus according to claim 15, wherein
the processing unit is further configured to determine that the PDU sessions, in the first network slice, of the plurality of terminal devices connected to the radio access network device are to be remapped to the second network slice.

20. The communication apparatus according to claim 15, wherein
the processing unit is further configured to receive an RRC resume request from a terminal device by using the transceiver unit, wherein the RRC resume request requests to resume a PDU session, in the first network slice, of the terminal device.

21. The communication apparatus according to claim 20, wherein
the processing unit is further configured to send an RRC resume message to the terminal device by using the transceiver unit, wherein the RRC resume message indicates the terminal device to access the second network slice.

**22.** The communication apparatus according to claim 21, wherein
the processing unit is further configured to determine that the PDU session, in the first network slice, of the terminal device is to be remapped to the second network slice.

**23.** The communication apparatus according to any one of claims 15 to 22, wherein

the processing unit is further configured to broadcast the first remapping information by using the transceiver unit, wherein
the first remapping information indicates a terminal device that receives the first remapping information to update, when a to-be-requested network slice is the first network slice, the to-be-requested network slice to one of the at least one second network slice.

**24.** A communication apparatus, comprising a transceiver unit and a processing unit, wherein

the transceiver unit is configured to send and receive a signal; and
the processing unit is configured to send first remapping information to a radio access network device by using the transceiver unit, wherein the first remapping information comprises an identifier of a first network slice and an identifier of at least one second network slice, and the first remapping information indicates that PDU sessions, in the first network slice, of a plurality of terminal devices connected to the radio access network device are to be remapped to one of the at least one second network slice; and
receiving first indication information sent by the radio access network device, wherein the first indication information comprises the identifier of the first network slice and the identifier of the second network slice, and the first indication information indicates a core network device to remap the PDU sessions, in the first network slice, of the plurality of terminal devices connected to the radio access network device to the second network slice.

**25.** The communication apparatus according to claim 24, wherein the first indication information further comprises an identifier of one terminal device connected to the radio access network device, and the second network slice is a network slice that the terminal device determines to access.

**26.** The communication apparatus according to claim 24, wherein

the processing unit is further configured to send, by the core network device, cell information to the radio access network device by using the transceiver unit when the radio access network device does not support the second network slice, wherein
the cell information comprises information about at least one first cell, the first cell supports the second network slice, and the cell information indicates the radio access network device to control the terminal devices connected to the radio access network device to access the first cell, to enable the terminal device connected to the radio access network device to access the second network slice through the first cell.

**27.** A communication apparatus, comprising a transceiver unit and a processing unit, wherein

the transceiver unit is configured to send and receive a signal; and
the processing unit is configured to perform the following operations by using the transceiver unit: when accessing a first network slice, receiving second remapping information sent by a radio access network device, wherein the second remapping information comprises an identifier of at least one third network slice, and the second remapping information indicates a terminal device to access one of the at least one third network slice, to enable a PDU session, in the first network slice, of the terminal device to be remapped to the third network slice of the at least one third network slice; and sending second indication information to the radio access network device, wherein the second indication information indicates that the terminal device is to access the third network slice of the at least one third network slice.

**28.** The communication apparatus according to claim 27, wherein
the processing unit is further configured to receive, by using the transceiver unit when the terminal device in an idle state or an inactive state, first remapping information broadcast by the radio access network device, wherein the first remapping information comprises an identifier of at least one second network slice, and the first remapping information indicates the terminal device to update, when a to-be-requested network slice is the first network slice, the to-be-requested network slice to one of the at least one second network slice.

**29.** A readable storage medium, configured to store instructions, wherein when the instructions are executed, the method according to any one of claims 1 to 14 is implemented.

Core network device
103

Radio access network
device 101

Radio access network
device 102

Terminal device
104

Terminal device
105

FIG. 1

| NS1 | NS2 | NS3 |
| --- | --- | --- |

A

B

| NS1 | NS3 | NS4 |
| --- | --- | --- |

C

| NS2 | NS3 | NS4 |
| --- | --- | --- |

FIG. 2

| Terminal device | Radio access network device | Core network device |
|---|---|---|

First remapping information 301

302
The radio access network device determines that a PDU session, in a first network slice, of the terminal device is to be remapped to a second network slice

First indication information 303

304
The core network device remaps the PDU session, in the first network slice, of the terminal device to the second network slice

PDU session modification complete indication information 305

First reconfiguration message 306

First reconfiguration complete message 307

FIG. 3

| Terminal device | Radio access network device | Core network device |
|---|---|---|

First remapping information    401

Second remapping information    402

Second indication information    403

First indication information    404

405

The core network device remaps a PDU session, in a first network slice, of the terminal device to a second network slice

PDU session modification complete indication information    406

First reconfiguration message    407

First reconfiguration complete message    408

FIG. 4

Terminal device

Radio access network device

Core network device

First remapping information 501

Third indication information 502

503

The core network device remaps a PDU session, in a first network slice, of the terminal device to a second network slice

Context modification request 504

First reconfiguration message 505

First reconfiguration complete message 506

FIG. 5

| Terminal device | Radio access network device | Core network device |
|---|---|---|

First remapping information · 601

RRC connection resume request · 602

603

The radio access network device determines that a PDU session, in a first network slice, of the terminal device is to be remapped to a second network slice

RRC resume message · 604

RRC resume complete message · 605

First indication information · 606

607

The core network device remaps the PDU session, in the first network slice, of the terminal device to the second network slice

PDU session modification complete indication information · 608

FIG. 6

FIG. 7

| Terminal device | Radio access network device | Target radio access network device (Target cell) | Core network device |
|---|---|---|---|

First remapping information and cell information 801

Select a target cell from at least one cell 802

Dual-connectivity request 803

Dual-connectivity acknowledgment message 804

Second reconfiguration message 805

Second reconfiguration complete message 806

Third reconfiguration complete message 807

First indication information 808

809

The core network device remaps a PDU session, in a first network slice, of the terminal device to a second network slice

PDU session modification complete indication information 810

FIG. 8

Terminal device

Radio access network device

Cell selection parameter of at least one network slice

901

902

The terminal device determines, based on the cell selection parameter of the at least one network slice, whether to select a second cell served by the radio access network device for camping on

FIG. 9

```
┌──────────────┐                                          ┌──────────────┐
│   Terminal   │                                          │ Radio access │
│    device    │                                          │network device│
└──────┬───────┘                                          └──────┬───────┘
       │        Cell selection parameter of at                   │
       │            least one network slice          1001        │
       │◄────────────────────────────────────────────/──────────│
       │                                                         │
       │    1002                                                 │
 ┌─────┴──────────────────────┐                                  │
 │  The terminal device       │                                  │
 │  determines, based         │                                  │
 │ on the cell selection      │                                  │
 │ parameter of the at        │                                  │
 │ least one network slice,   │                                  │
 │ whether to                 │                                  │
 │ select a second cell       │                                  │
 │ served by the radio        │                                  │
 │ access network device      │                                  │
 │ for camping on             │                                  │
 └─────┬──────────────────────┘                                  │
       │      Cell reselection measurement startup               │
       │   parameter of the at least one network slice  1003     │
       │◄────────────────────────────────────────────/──────────│
       │                                                         │
       │   1004                                                  │
 ┌─────┴──────────────────────┐                                  │
 │ The terminal device        │                                  │
 │ determines, based          │                                  │
 │ on the cell reselection    │                                  │
 │ measurement                │                                  │
 │ startup parameter of the   │                                  │
 │ at least one               │                                  │
 │ network slice, whether     │                                  │
 │ to start                   │                                  │
 │ measurement on a third     │                                  │
 │ cell served by             │                                  │
 │ the radio access network   │                                  │
 │ device                     │                                  │
 └─────┬──────────────────────┘                                  │
       │       Cell reselection parameter of the at              │
       │            least one network slice          1005        │
       │◄────────────────────────────────────────────/──────────│
       │                                                         │
       │   1006                                                  │
 ┌─────┴──────────────────────┐                                  │
 │ The terminal device        │                                  │
 │ determines, based          │                                  │
 │ on the cell reselection    │                                  │
 │ parameter of the           │                                  │
 │ network slice, whether     │                                  │
 │ to reselect a              │                                  │
 │ fourth cell served by      │                                  │
 │ the radio access           │                                  │
 │ network device for         │                                  │
 │ camping on                 │                                  │
 └─────┬──────────────────────┘                                  │
       │                                                         │
```

FIG. 10

1101

A terminal device obtains information about a
network slice supported by a neighboring cell

1102

The terminal device measures the neighboring cell,
to obtain signal quality of the neighboring cell

1103

When signal quality of a fifth cell included in the
neighboring cell satisfies a cell reselection
condition, the terminal device reselects the fifth
cell for camping on

FIG. 11

FIG. 12

130

Transceiver unit
1301

Processing unit
1302

FIG. 13

140

Processor 1402

Memory 1403

Bus 1404

Transceiver 1401

FIG. 14

## INTERNATIONAL SEARCH REPORT

| International application No. |
|---|
| **PCT/CN2020/088528** |

| A. | CLASSIFICATION OF SUBJECT MATTER |
|---|---|

H04W 36/14(2009.01)i

According to International Patent Classification (IPC) or to both national classification and IPC

| B. | FIELDS SEARCHED |
|---|---|

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP: 网络切片, 切换, 映射, 重映射, 核心网, 接入设备, 终端设备, 负载, 平衡, 均衡, 会话, 协议数据单元, network slicing, network slice, switch, handover, map, remap, core network, CN, access device, terminal, payload, balance, session, PDU

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107820291 A (HUAWEI TECHNOLOGIES CO., LTD.) 20 March 2018 (2018-03-20) description paragraphs [0193]-[0247], [0436], [0543], figure 3 | 1-29 |
| X | CN 110838927 A (CHINA MOBILE COMMUNICATION LTD., RESEARCH INSTITUTE et al.) 25 February 2020 (2020-02-25) description paragraphs [0062]-[0162] | 1-12, 15-26, 29 |
| A | CN 109168180 A (HUAWEI TECHNOLOGIES CO., LTD.) 08 January 2019 (2019-01-08) entire document | 1-29 |
| A | EP 3562194 A1 (SIEMENS AKTIENGESELLSCHAFT) 30 October 2019 (2019-10-30) entire document | 1-29 |
| A | WO 2018135992 A1 (TELEFONAKTIEBOLAGET LM ERICSSON (PUBL)) 26 July 2018 (2018-07-26) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2020** | **19 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/088528**

| Patent document cited in search report | | | Publication date (day/month/year) | Patent family member(s) | | | Publication date (day/month/year) |
|---|---|---|---|---|---|---|---|
| CN | 107820291 | A | 20 March 2018 | WO | 2018045877 | A1 | 15 March 2018 |
| CN | 110838927 | A | 25 February 2020 | WO | 2020034983 | A1 | 20 February 2020 |
| CN | 109168180 | A | 08 January 2019 | CN | 109041138 | A | 18 December 2018 |
| | | | | WO | 2019029674 | A1 | 14 February 2019 |
| | | | | CN | 109041138 | B | 13 August 2019 |
| | | | | CN | 111491345 | A | 04 August 2020 |
| | | | | KR | 20190117648 | A | 16 October 2019 |
| | | | | AU | 2018315286 | A1 | 26 September 2019 |
| | | | | EP | 3576458 | A1 | 04 December 2019 |
| | | | | CN | 109168180 | B | 10 March 2020 |
| | | | | CN | 109392038 | A | 26 February 2019 |
| | | | | JP | 2020517130 | A | 11 June 2020 |
| | | | | BR | 112019019985 | A2 | 28 April 2020 |
| | | | | EP | 3576458 | A4 | 22 July 2020 |
| | | | | US | 2019306761 | A1 | 03 October 2019 |
| EP | 3562194 | A1 | 30 October 2019 | WO | 2019206796 | A1 | 31 October 2019 |
| WO | 2018135992 | A1 | 26 July 2018 | | None | | |

Form PCT/ISA/210 (patent family annex) (January 2015)